(19) Europäisches Patentamt
European Patent Office
Office européen des brevets

(11) EP 4 462 526 A1

(12) # EUROPEAN PATENT APPLICATION

(43) Date of publication:
**13.11.2024 Bulletin 2024/46**

(21) Application number: **23173159.7**

(22) Date of filing: **12.05.2023**

(51) International Patent Classification (IPC):
***H01M 8/1025*** *(2016.01)* ***H01M 8/1027*** *(2016.01)*
***H01M 8/1044*** *(2016.01)* ***H01M 8/106*** *(2016.01)*
***H01M 8/20*** *(2006.01)* ***H01M 8/10*** *(2016.01)*

(52) Cooperative Patent Classification (CPC):
**H01M 8/1025; H01M 8/1027; H01M 8/1044; H01M 8/106; H01M 8/20;** H01M 2008/1095; H01M 2300/0082

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **MANN+HUMMEL LIFE SCIENCES & ENVIRONMENT HOLDING SINGAPORE PTE. LTD.**
  **Singapore 139234 (SG)**
- **Novamem AG**
  **8952 Schlieren (CH)**

(72) Inventors:
- **FASOLD, MICHAEL**
  **71549 Auenwald (DE)**
- **BENDER, JOHANNES**
  **71149 Bondorf (DE)**
- **SCHENK, ANNETTE**
  **Fuquay-Varina, NC, 27526 (US)**
- **LOEPFE, MICHAEL**
  **8006 Zürich (CH)**

(74) Representative: **Maiwald GmbH**
**Elisenhof**
**Elisenstraße 3**
**80335 München (DE)**

(54) **REINFORCED ION EXCHANGE MEMBRANES**

(57) The present invention provides a cell membrane comprising: an ion exchange membrane comprising at least one first polymer exhibiting acidic functional groups A; and a fabric, wherein the fabric comprises fibers, and wherein the surface of the fibers exhibits basic functional groups C, and wherein the fabric supports the ion exchange membrane. The present invention also provides a method for manufacturing the disclosed cell membrane, a device comprising the disclosed cell membrane, and a use of the disclosed cell membrane in an electrodialysis cell, in a fuel cell, in a PEM electrolyzer, or in a redox flow battery.

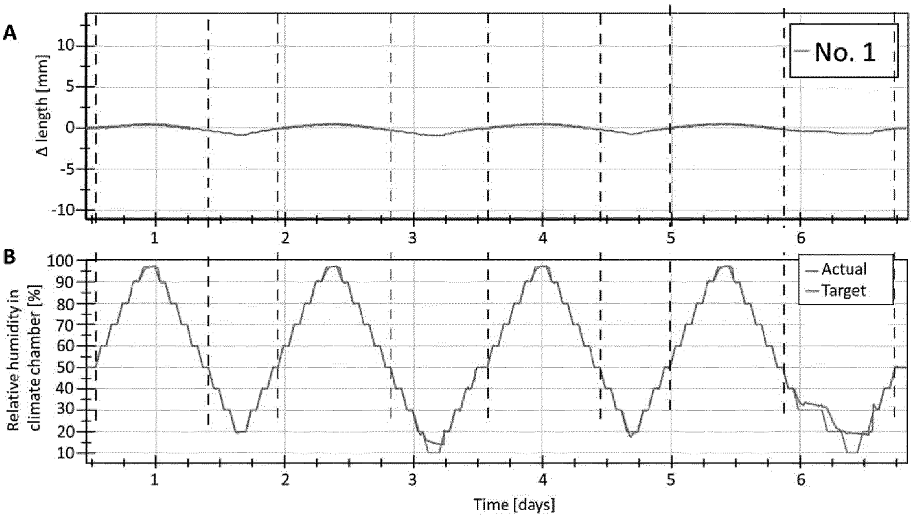


Fig.1



EP 4 462 526 A1

## Description

### FIELD OF THE INVENTION

The present disclosure relates to a cell membrane comprising an ion exchange membrane and a fabric, a method for manufacturing said cell membrane, the use thereof, and a device comprising said cell membrane.

### BACKGROUND

The production and storage of energy in the form of electric charge is a major challenge.

On the one hand, there is a demand to store energy produced from natural sources that depend on environmental circumstances, such as the weather, when energy production is high so that it can be made available at times when production is low.

On the other hand, there is an increasing demand for storing energy in devices and machines that nowadays are designed to be battery-powered as opposed to fossil fuels, such as petrol and diesel.

However, the variety of different uses and demands that are imposed to batteries also make it necessary to develop new technologies that work under all kinds of different conditions, and in particular in changing conditions. In other words, it is of utmost importance that the environmental conditions, such as temperature, humidity, and the like, do not change the performance of a device; or even worse, break the device.

In this context, it is understood that the dimensional stability of known polymer-blend ion exchange membranes, such as s-PEEK based membranes, does not meet these requirements. In particular, polymer-blend membranes, and s-PEEK based membranes in particular, are susceptible to swelling and shrinking upon a variation in air humidity. In other words, known polymer-blend membranes change their size when the environmental conditions change. This does not only result in a change of membrane performance but may also lead to the rupture of the membrane itself. In such case, the device comprising the polymer-blend ion exchange membrane is destroyed and must be replaced.

The inventors of the present disclosure also found out that even a reinforcement of polymer-blend ion exchange membranes, e.g. with PPS woven, or a reinforced sPEEK membrane containing a PE nonwoven-reinforcement fabric, only slightly improves the dimensional stability of a polymer blend ion exchange membrane as compared to an unreinforced membrane. For broad application, said minor improvement is not sufficient.

In conclusion, the dimensional instability of the polymer blend ion exchange membranes is a major bottleneck for the assembly of the device upon changing environmental conditions, such as a weather change or change of season. Another critical point is when the moisture condition of the installed membrane changes during operation or maintenance, e.g. due to air (contaminations) in the system or when the electrolyte has to be removed from the system due to maintenance.

This means that a polymer blend membrane may be significantly smaller in low humidity than in high humidity. In extreme situations, the shrinking of the polymer blend membrane can lead to the rupture of the membrane which inevitably destroys the device, such as a redox flow battery or fuel cell.

### SUMMARY OF THE INVENTION

In view of the above, there is still a need for ion exchange membranes that have a high dimensional stability and, hence, can be used in different climates, at different temperatures and at different humidity, and in areas in which the environmental conditions may change rapidly and unpredictably.

In other words, it is an object of the present disclosure to provide cell membranes having a high dimensional stability, in particular at differing environmental conditions, such as humidity and/or temperature.

The inventors of the present disclosure have surprisingly found that a cell membrane comprising an ion exchange membrane comprising at least one first polymer exhibiting acidic functional groups A, and a fabric, wherein the fabric comprises fibers, and wherein the surface of the fibers exhibit basic functional groups C, and wherein the fabric supports the ion exchange membrane can solve the above-defined technical problem. The inventors of the present disclosure have surprisingly found that said cell membrane has an unexpectedly high degree of dimensional stability. In other words, said cell membrane does not essentially change its dimension with changes of the relative humidity, i.e. the cell membrane does not show significant swelling in high relative humidity and does not show significant shrinking in low relative humidity conditions.

According to a first aspect, the present disclosure relates to a cell membrane comprising a) an ion exchange membrane comprising at least one first polymer exhibiting acidic functional groups A, and b) a fabric, wherein the fabric comprises fibers, and wherein the fibers exhibit basic functional groups C, and wherein the fabric supports the ion exchange membrane. It is understood that the basic functional groups C are exhibited on the surface of the fibers. In other words, the present disclosure relates to a cell membrane comprising a) an ion exchange membrane comprising

at least one first polymer exhibiting acidic functional groups A, and b) a fabric, wherein the fabric comprises fibers, and wherein the surface of the fibers exhibits basic functional groups C, and wherein the fabric supports the ion exchange membrane.

According to a second aspect, the present disclosure relates to a method for manufacturing the cell membrane according to the first aspect, the method comprising the steps of i) providing a polymer solution comprising the at least one first polymer exhibiting acidic functional groups A in a solvent; ii) providing a fabric, wherein the fabric comprises fibers, and wherein the surface of the fibers exhibits basic functional groups C; iii) casting said polymer solution on top of the fabric, or casting said polymer solution onto a surface to yield a polymer film and placing the fabric on top of said polymer film to provide a coated fabric; and iv) drying said coated fabric to provide the cell membrane.

According to a third aspect, the present disclosure relates to a use of the cell membrane according to the first aspect of the present disclosure in an electrodialysis cell, in a fuel cell, in a PEM electrolyzer, or in a redox flow battery.

According to a fourth aspect, the present disclosure relates to a device comprising a cell membrane according to the first aspect of the present disclosure, wherein the device is an electrodialysis cell, a fuel cell, a PEM electrolyzer, or a redox flow battery.

The present invention will be described with respect to particular embodiments and with reference to certain examples, but the invention is not limited thereto, and it is only defined by the appending claims.

## BRIEF DESCRIPTION OF FIGURES

Fig. 1 Panel A: Test result of measurement of dimensional stability of cell membrane No. 1 (sPEEK, 100 wt.-%) according to Example 4. Panel B: Course of relative humidity during the evaluation of dimensional stability according to Example 4.

Fig. 2 Panel A: Test result of measurement of dimensional stability of cell membrane No. 2 (blend of 95 wt.-% of sPEEK and 5 wt.-% mPBI based on the total weight of the polymer blend) according to Example 4. Panel B: Course of relative humidity during the evaluation of dimensional stability according to Example 4.

Fig. 3 Panel A: Test result of measurement of dimensional stability of cell membrane No. 3 (blend of 71 wt.-% of sPEEK and 29 wt.-% PVP based on the total weight of the polymer blend) according to Example 4. Panel B: Course of relative humidity during the evaluation of dimensional stability according to Example 4.

Fig. 4 Panel A: Test result of measurement of dimensional stability of cell membrane No. C1 (blend of 95 wt.-% of sPEEK and 5 wt.-% of mPBI based on the total weight of the polymer blend) according to Example 4. Panel B: Course of relative humidity during the evaluation of dimensional stability according to Example 4.

Fig. 5 Panel A: Test result of measurement of dimensional stability of comparative cell membrane No. C2 (blend of 90 wt.-% of sPEEK and 10 wt.-% of mPBI based on the total weight of the polymer blend) according to Example 4. Panel B: Course of relative humidity during the evaluation of dimensional stability according to Example 4.

Fig. 6 Panel A: Test result of measurement of dimensional stability of comparative cell membrane No. C3 (reinforced sPEEK membrane) according to Example 4. Panel B: Course of relative humidity during the evaluation of dimensional stability according to Example 4.

Fig. 7 Panel A: Test result of measurement of dimensional stability of comparative cell membrane No. C4 (unreinforced sPEEK membrane) according to Example 4. Panel B: Course of relative humidity during the evaluation of dimensional stability according to Example 4.

Fig. 8 Panel A: Test result of measurement of dimensional stability of comparative cell membrane No. C5 (PFSA membrane) according to Example 4. Panel B: Course of relative humidity during the evaluation of dimensional stability according to Example 4.

## DETAILED DESCRIPTION OF THE INVENTION

### The cell membrane

According to a first aspect, the present disclosure relates to a cell membrane comprising a) an ion exchange

membrane comprising at least one first polymer exhibiting acidic functional groups A, and b) a fabric, wherein the fabric comprises fibers, and wherein the surface of the fibers exhibit basic functional groups C, and wherein the fabric supports the ion exchange membrane.

The inventors of the present disclosure have surprisingly found that a cell membrane according to the first aspect of the present disclosure exhibits a particularly high dimensional stability to changes of relative humidity. In other words, the cell membrane according to the first aspect of the present disclosure does not show a considerable increase in length (swelling) upon an increase of relative humidity up to 97 % relative humidity. Also, the cell membrane according to the first aspect of the present disclosure does not show a considerable decrease in length (shrinking) upon a decrease in relative humidity to about 20 % relative humidity. At the same time, the electrochemical properties of the cell membrane are comparable to conventional polymer blend membranes. For example, the specific resistance of the cell membrane according to the first aspect of the present disclosure is comparable to the specific resistance of a polymer blend membrane despite the reinforcement of the cell membrane with a fabric.

These properties allow for the use of the cell membrane according to the first aspect of the present disclosure in a wide variety of devices under all sorts of conditions. These devices can be used irrespective of the environmental conditions in which the device is assembled and used - may it be a hot and humid day in the amazon rainforest or a cold and dry night on a mountain top. Thus, also the maintenance effort is decreased and the durability of the devices is increased.

The cell membrane has two major components: a fabric exhibiting basic functional groups C and an ion exchange membrane.

## The fabric

According to the first aspect of the present disclosure, the fabric comprises fibers, wherein the fibers exhibit basic functional groups C. It is understood that the basic functional groups C are presented on the surface of the fibers. In this way, the basic functional groups C can undergo interactions with other components of the cell membrane, such as the ion exchange membrane.

In other words: According to the first aspect of the present disclosure, the fabric comprises fibers, wherein the surface of the fibers exhibits basic functional groups C.

According to a preferred embodiment of the first aspect, the fabric is a woven or non-woven fabric.

According to a preferred embodiment of the first aspect, the fabric is a non-woven fabric. A non-woven fabric is typically manufactured by putting fibers together in the form of a sheet and then binding them together by applying chemical, mechanical, heat, and/or solvent treatment. For example, a non-woven fabric may be manufactured by interlocking the fibers mechanically, e.g. with serrated needles, with an adhesive, or thermally by applying a binder and melting the binder onto the fibers by increasing the temperature.

Non-woven fabrics have the advantage that a huge variety of fibers can be used and that they are cheap to manufacture.

According to another preferred embodiment of the first aspect, the fabric is a woven fabric. A woven fabric is a fabric that is formed by weaving or knitting long fibers. As such, a woven fabric is a fabric made by interlacing two threads of fibers at right angles to one another, that are a vertical thread and a horizontal thread of fibers. Woven fabrics do not stretch easily in the direction of the threads of fibers, but only diagonally to the direction of the threads of fibers forming the fabric. Woven fabrics have the advantage that the open surface can be adjusted conveniently: A closely woven fabric is more durable and mechanically stronger but has a small open surface. On the other hand side, a loosely woven fabric may still have a high strength but a higher open surface.

For the performance of the cell membrane of the first aspect, the open surface of a fabric is a crucial factor. According to a preferred embodiment of the first aspect, the fabric has an open surface in the range of from about 5 % to about 90 %.

According to a preferred embodiment of the first aspect, the fabric is a non-woven fabric. According to another preferred embodiment of the first aspect, the non-woven fabric has an open surface in the range of from about 5 % to about 90 %. According to another preferred embodiment of the first aspect, a non-woven fabric has an open surface in the range of from about 10 % to about 90 %. According to another preferred embodiment of the first aspect, the non-woven fabric has an open surface in the range of from about 15 % to about 90 %. According to another preferred embodiment of the first aspect, the non-woven fabric has an open surface in the range of from about 20 % to about 90 %. According to another preferred embodiment of the first aspect, the non-woven fabric has an open surface in the range of from about 25 % to about 90 %. According to a further preferred embodiment of the first aspect, the non-woven fabric has an open surface in the range of from about 30 % to about 90 %.

According to a preferred embodiment of the first aspect, the fabric is a woven fabric. According to a preferred embodiment of the first aspect, the woven fabric has an open surface in the range of from about 5 % to about 90 %. According to a preferred embodiment of the first aspect, the woven fabric has an open surface in the range of from about

5 % to about 80 %. According to a preferred embodiment of the first aspect, the woven fabric has an open surface in the range of from about 5 % to about 70 %. According to another preferred embodiment of the first aspect, the woven fabric has an open surface in the range of from about 5 % to about 65 %. According to another preferred embodiment of the first aspect, the woven fabric has an open surface in the range of from about 5 % to about 60 %. According to another preferred embodiment of the first aspect, the woven fabric has an open surface in the range of from about 5 % to about 55 %. According to another preferred embodiment of the first aspect, the woven fabric has an open surface in the range of from about 5 % to about 50 %. According to another preferred embodiment of the first aspect, the woven fabric has an open surface in the range of from about 10 % to about 70 %. According to another preferred embodiment of the first aspect, the woven fabric has an open surface in the range of from about 10 % to about 65 %. According to another preferred embodiment of the first aspect, the woven fabric has an open surface in the range of from about 10 % to about 60 %. According to another preferred embodiment of the first aspect, the woven fabric has an open surface in the range of from about 10 % to about 55 %. According to another preferred embodiment of the first aspect, the woven fabric has an open surface in the range of from about 10 % to about 50 %. According to another preferred embodiment of the first aspect, the woven fabric has an open surface in the range of from about 15 % to about 70 %. According to another preferred embodiment of the first aspect, the woven fabric has an open surface in the range of from about 15 % to about 65 %. According to another preferred embodiment of the first aspect, the woven fabric has an open surface in the range of from about 15 % to about 60 %. According to another preferred embodiment of the first aspect, the woven fabric has an open surface in the range of from about 15 % to about 55 %. According to another preferred embodiment of the first aspect, the woven fabric has an open surface in the range of from about 15 % to about 50 %. According to another preferred embodiment of the first aspect, the woven fabric has an open surface in the range of from about 17 % to about 70 %. According to another preferred embodiment of the first aspect, the woven fabric has an open surface in the range of from about 17 % to about 65 %. According to another preferred embodiment of the first aspect, the woven fabric has an open surface in the range of from about 17 % to about 60 %. According to another preferred embodiment of the first aspect, the woven fabric has an open surface in the range of from about 17 % to about 55 %. According to another preferred embodiment of the first aspect, the woven fabric has an open surface in the range of from about 17 % to about 50 %. According to another preferred embodiment of the first aspect, the woven fabric has an open surface in the range of from about 19 % to about 70 %. According to another preferred embodiment of the first aspect, the woven fabric has an open surface in the range of from about 19 % to about 65 %. According to another preferred embodiment of the first aspect, the woven fabric has an open surface in the range of from about 19 % to about 60 %. According to a further preferred embodiment of the first aspect, the woven fabric has an open surface in the range of from about 19 % to about 55 %. According to a further preferred embodiment of the first aspect, the woven fabric has an open surface in the range of from about 19 % to about 50 %.

It is understood that every fiber of the cell membrane according to the first aspect does not contribute to the transport of charge through the cell membrane, which is achieved by the ion exchange membrane. In other words, every fiber increases the resistance of the cell membrane. Only the open surface of a fabric, that is the surface between the fibers, can be filled with the material constituting for the ion exchange membrane and can contribute to the exchange of ions through the cell membrane.

However, if the open surface of a woven or non-woven fabric exceeds 90 %, the amount of fibers is too low to provide the cell membrane with a sufficient support and mechanical stability. If the open surface of a woven or non-woven fabric is too low, such as less than 5 %, the resistance of the cell membrane is increased due to the high amount of fibers in the cell membrane.

According to the first aspect of the present disclosure, the fibers exhibit basic functional groups C on the surface. In other words, the basic functional groups C are present at the surface of the fibers.

According to a preferred embodiment of the first aspect, the basic functional groups C of the fibers are amine groups. According to another preferred embodiment of the first aspect, the basic functional groups C of the fibers are imine groups. According to another preferred embodiment of the first aspect, the basic functional groups C of the fibers are primary amine groups ($-NH_2$). According to another preferred embodiment of the first aspect, the basic functional groups C of the fibers are secondary amine groups ($-NHR^1$). According to another preferred embodiment of the first aspect, the basic functional groups C of the fibers are tertiary amine groups ($-NR^1_2$ or-$NR^1R^2$). According to a further preferred embodiment of the first aspect, the basic functional groups C of the fibers are primary amine groups ($-NH_2$).

According to another preferred embodiment of the first aspect, the basic functional groups C of the fibers are imine groups $C(=NR^1)$, wherein $R^1$ is hydrogen or a linear or branched ($C_1$-$C_6$)-alkyl. According to a preferred embodiment of the first aspect, the imine group is part of the backbone forming the fiber. In other words, the imine group is present in the main chain of the polymeric fiber. According to another preferred embodiment, the imine group is present in a side chain of the backbone forming the fiber. In other words, the imine group is present in at least one substituent of the repeating units forming the main chain of the polymeric fiber.

According to another preferred embodiment of the first aspect, the basic functional groups C of the fibers are primary imine groups $C(=NH)$. According to another preferred embodiment of the first aspect, the basic functional groups

C of the fibers surface are secondary imine groups C(=N-$R^1$), wherein $R^1$ is a linear or branched ($C_1$-$C_6$)-alkyl.

According to another preferred embodiment of the first aspect, the basic functional groups C of the fibers are primary imine groups of formula -CH(=NH). According to another preferred embodiment of the first aspect, the basic functional groups C of the fibers are secondary imine groups of formula -CH(=N-$R^1$), wherein $R^1$ is a linear or branched ($C_1$-$C_6$)-alkyl.

When the basic functional group C of the fibers is secondary amine, tertiary amine, or secondary imine, each $R^1$ is independently a linear or branched ($C_1$-$C_6$)-alkyl. In other words, in a group such as -$NR^1_2$ the two occurrences of $R^1$ may be the same, or different. - $NR^1_2$ may be expressed as -$NR^1R^2$, wherein $R^1$ is as disclosed herein and $R^2$ is hydrogen or a linear or branched ($C_1$-$C_6$)-alkyl. $R^1$ may be the same as or different from $R^2$.

According to a preferred embodiment of the first aspect, the fibers exhibit one type of basic functional groups C. According to a further preferred embodiment of the first aspect, the fibers exhibit primary amine groups (-$NH_2$) and no secondary amine groups, no tertiary amine groups, no primary imine groups, and no secondary imine groups are present.

According to another preferred embodiment of the first aspect, the fibers comprise a coating with a compound comprising basic functional groups C.

The inventors of the present disclosure have surprisingly found that the presence of basic functional groups C on the fibers comprised in the fabric considerably reduces the swelling and shrinking of a cell membrane upon changes in humidity. As can be seen from the test results in Example 4, said reduction of swelling and shrinking is significantly higher than for cell membranes comprising an ion exchange membrane and a fabric comprising fibers having a neutral surface.

Without wishing to be bound by theory, it is assumed that the basic functional groups C of the fibers comprised in the fabric interact with the acidic functional groups A of the at least one polymer comprised in the ion exchange membrane. Said interaction may be ionic interactions or hydrogen-bonds. Due to this interaction, the bonding between the ion exchange membrane and the fabric that supports the ion exchange membrane is very strong. Therefore, it is understood that the mechanical properties of the cell membrane of the first aspect of the present disclosure is mainly governed by the fabric.

According to a preferred embodiment of the present disclosure, the fibers comprise a polymer comprising basic functional groups C. In such embodiment, it is understood that the monomers or repeating units forming the polymer comprising basic functional groups C exhibit basic functional groups C. Examples of monomers exhibiting basic functional groups are dimethylaminoethylacrylat (2-dimethylaminoethylacrylate; DMAEA), 3,3'-diaminobenzidine, 3,3',4,4'-tetraaminodiphenyl, and allylamine. According to another preferred embodiment, basicity is not induced through the nitrogen atom, but through the phosphorus atom. Examples of a basic functional group C having a phosphorus atom are the phosphine group (-$PR^1_3$) or the phosphonium ion $(-PR^1_4)^+$, wherein $R^1$ is hydrogen or a linear or branched ($C_1$-$C_6$)-alkyl. The phosphine group may be a primary, secondary or tertiary phosphine group, wherein each $R^1$ is independently a linear or branched ($C_1$-$C_6$)-alkyl, and wherein two occurrences of $R^1$ may be the same, or different. The phosphine group may be part of the backbone forming the fiber, e.g., the phosphine group is present in the main chain of the polymeric fiber. The phosphine group or phosphonium ion may be present in a side chain of the backbone forming the fiber, e.g., the phosphine group or phosphonium ion is present in at least one substituent of the repeating units forming the main chain of the polymeric fiber. An example of a polymer or monomer exhibiting basic functional group C having a phosphorus atom is a polymer or monomer comprising a triphenyl(phosphine) substituent or a triethyl(phosphine) substituent.

According to another preferred embodiment of the first aspect, the fibers exhibiting basic functional groups C comprise a homopolymer of dimethylaminoethylacrylat (2-dimethylaminoethylacrylate; DMAEA), 3,3'-diaminobenzidine, 3,3',4,4'-tetraaminodiphenyl, N-methyl-N-ethenylamine or allylamine. According to another preferred embodiment of the first aspect, the fibers exhibiting basic functional groups C comprise a copolymer of a first monomer exhibiting basic functional groups C selected from the group consisting of dimethylaminoethylacrylat (2-dimethylaminoethylacrylate; DMAEA), 3,3'-diaminobenzidine, 3,3',4,4'-tetraaminodiphenyl, N-methyl-N-ethenylamine, and allylamine, and a second monomer that can be copolymerized with the first monomer exhibiting basic functional groups C.

If the first monomer exhibiting basic functional groups C is 3,3'-diaminobenzidine or 3,3',4,4'-tetraaminodiphenyl, the second polymer is diphenyl isophthalate. It is understood that the polymerization of 3,3'-diaminobenzidine or 3,3',4,4'-tetraaminodiphenyl with diphenyl isophthalate results in polybenzimidazol (PBI).

If the first monomer exhibiting basic functional groups C contains an alkene group ($H_2C$=CH-), such as dimethylaminoethylacrylat, N-methyl-N-ethenylamine, or allylamine, the second monomer that can be copolymerized with the first monomer exhibiting basic functional groups C also contains an alkene group ($H_2C$=CH-). Examples of second monomers that can be copolymerized with the first monomer exhibiting basic functional groups C are ethene, propene, vinyl chloride monomers, tetrafluoroethylene monomers, acryl nitrile monomers, styrene monomers, (meth-)acrylamide monomers, (meth-)acrylate monomers, butadiene monomers, (meth-)acrylic acid ester monomers, vinyl acetate monomers, and the like.

According to a preferred embodiment of the first aspect, the polymer comprising basic functional groups C is poly(allylamine). According to another preferred embodiment of the first aspect, the polymer comprising basic functional groups C is poly(N-methylvinylamine). According to another preferred embodiment of the first aspect, the polymer comprising basic functional groups C is poly(dimethylaminoethyl acrylate).

According to a preferred embodiment of the present disclosure, the fibers comprise an ionomer or an ion-conductive polymer comprising basic functional groups C. Examples of an ionomer or ion-conductive polymer comprising basic functional groups C are poly(thio-1,4-phenylene) (PPS), polyamides, or other ion-conductive reinforcement materials.

According to another preferred embodiment of the first aspect, the fibers comprise a coating with a compound comprising basic functional groups C. According to a further preferred embodiment of the first aspect, the fibers comprise an aminosilane coating. According to an even further preferred embodiment of the first aspect, the fibers comprise glass fibers with an aminosilane coating. According to a further preferred embodiment of the first aspect, the fibers comprise glass fibers with a (3-aminopropyl)triethoxysilane.

According to a preferred embodiment of the first aspect, the fibers comprise a coating with a compound comprising basic functional groups C in an amount of about 0.001 wt.-% or more based on the total weight of the fibers and the coating. According to another preferred embodiment of the first aspect, the fibers comprise a coating with a compound comprising basic functional groups C in an amount of about 0.005 wt.-% or more based on the total weight of the fibers and the coating. According to another preferred embodiment of the first aspect, the fibers comprise a coating with a compound comprising basic functional groups C in an amount of about 0.01 wt.-% or more based on the total weight of the fibers and the coating. According to another preferred embodiment of the first aspect, the fibers comprise a coating with a compound comprising basic functional groups C in an amount of about 0.03 wt.-% or more based on the total weight of the fibers and the coating. According to a further preferred embodiment of the first aspect, the fibers comprise a coating with a compound comprising basic functional groups C in an amount of about 0.05 wt.-% or more based on the total weight of the fibers and the coating. According to a further preferred embodiment of the first aspect, the fibers comprise a coating with a compound comprising basic functional groups C in an amount of about 0.08 wt.-% or more based on the total weight of the fibers and the coating.

According to a preferred embodiment of the first aspect, the fibers comprise a coating with a compound comprising basic functional groups C in an amount of about 2.0 wt.-% or less based on the total weight of the fibers and the coating. According to another preferred embodiment of the first aspect, the fibers comprise a coating with a compound comprising basic functional groups C in an amount of about 1.5 wt.-% or less based on the total weight of the fibers and the coating. According to another preferred embodiment of the first aspect, the fibers comprise a coating with a compound comprising basic functional groups C in an amount of about 1.0 wt.-% or less based on the total weight of the fibers and the coating. According to another preferred embodiment of the first aspect, the fibers comprise a coating with a compound comprising basic functional groups C in an amount of about 0.8 wt.-% or less based on the total weight of the fibers and the coating. According to another preferred embodiment of the first aspect, the fibers comprise a coating with a compound comprising basic functional groups C in an amount of about 0.6 wt.-% or less based on the total weight of the fibers and the coating. According to another preferred embodiment of the first aspect, the fibers comprise a coating with a compound comprising basic functional groups C in an amount of about 0.5 wt.-% or less based on the total weight of the fibers and the coating. According to a further preferred embodiment of the first aspect, the fibers comprise a coating with a compound comprising basic functional groups C in an amount of about 0.4 wt.-% or less based on the total weight of the fibers and the coating. According to a further preferred embodiment of the first aspect, the fibers comprise a coating with a compound comprising basic functional groups C in an amount of about 0.3 wt.-% or less based on the total weight of the fibers and the coating.

According to a preferred embodiment of the first aspect, the fibers comprise a coating with a compound comprising basic functional groups C in an amount in the range of form about 0.001 to about 2.0 wt.-% based on the total weight of the fibers and the coating. According to a preferred embodiment of the first aspect, the fibers comprise a coating with a compound comprising basic functional groups C in an amount in the range of form about 0.005 to about 1.5 wt.-% based on the total weight of the fibers and the coating. According to a preferred embodiment of the first aspect, the fibers comprise a coating with a compound comprising basic functional groups C in an amount in the range of form about 0.005 to about 1.0 wt.-% based on the total weight of the fibers and the coating. According to a preferred embodiment of the first aspect, the fibers comprise a coating with a compound comprising basic functional groups C in an amount in the range of form about 0.01 to about 0.8 wt.-% based on the total weight of the fibers and the coating. According to a preferred embodiment of the first aspect, the fibers comprise a coating with a compound comprising basic functional groups C in an amount in the range of form about 0.03 to about 0.6 wt.-% based on the total weight of the fibers and the coating. According to a preferred embodiment of the first aspect, the fibers comprise a coating with a compound comprising basic functional groups C in an amount in the range of form about 0.05 to about 0.5 wt.-% based on the total weight of the fibers and the coating. According to a preferred embodiment of the first aspect, the fibers comprise a coating with a compound comprising basic functional groups C in an amount in the range of form about 0.05 to about

0.4 wt.-% based on the total weight of the fibers and the coating. According to a preferred embodiment of the first aspect, the fibers comprise a coating with a compound comprising basic functional groups C in an amount in the range of form about 0.05 to about 0.3 wt.-% based on the total weight of the fibers and the coating. According to a preferred embodiment of the first aspect, the fibers comprise a coating with a compound comprising basic functional groups C in an amount in the range of form about 0.08 to about 0.3 wt.-% based on the total weight of the fibers and the coating.

When the fibers comprise a coating with a compound comprising basic functional groups C in an amount lower than 0.001 wt.% based in the total weight of the fibers and the coating, the surface of the fibers does not exhibit a sufficient amount of basic functional groups C to achieve the stabilizing effect. In other words, the fabric may not provide sufficient mechanical support. If the fibers comprise a coating with a compound comprising basic functional groups C in an amount more than 2 wt.% based in the total weight of the fibers and the coating, the preparation of the fibers is expensive and the mechanical properties of the fibers may not be further improved.

According to another preferred embodiment of the first aspect, the fibers comprise a polymer selected from the group consisting of polyester (PE), polyimide (PI), poly(thio-1,4-phenylene) (PPS). According to a further preferred embodiment of the first aspect, the fibers comprise glass fibers.

Glass fibers exhibit the advantages of no water absorption and excellent stability against deformation under temperature. Furthermore, compared to polymers, glass fibers have a significantly lower creep behavior under temperature and load.

According to a preferred embodiment of the first aspect, the fabric has a thickness in the range of from about 10 to about 300 μm. According to another preferred embodiment of the first aspect, the fabric has a thickness in the range of from about 10 to about 200 μm. According to another preferred embodiment of the first aspect, the fabric has a thickness in the range of from about 10 to about 100 μm. According to another preferred embodiment of the first aspect, the fabric has a thickness in the range of from about 10 to about 60 μm. According to a further preferred embodiment of the first aspect, the fabric has a thickness in the range of from about 15 to about 40 μm. According to a further preferred embodiment of the first aspect, the fabric has a thickness in the range of from about 20 to about 30 μm.

It is understood that a low thickness of the fabric is preferable to reduce the specific resistance of the cell membrane. However, if the thickness of the membrane is below 10 μm, the stability of the membrane film that is arranged between the fibers may be reduced to an extend that breakthrough of the membrane can occur during usage or handling. Such event can also be referred to as a membrane rupture.

## The ion exchange membrane

According to the first aspect of the present disclosure, the cell membrane comprises an ion exchange membrane.

It is understood that the ion exchange membrane comprises at least one first polymer exhibiting acidic functional groups A. However, the ion exchange membrane can optionally further comprise at least one second polymer exhibiting basic functional groups B. If the ion exchange membrane comprises both at least one first polymer exhibiting acidic functional groups A and at least one second polymer exhibiting basic functional groups B, the ion exchange membrane is also referred to as an "acid-base polymer blend membrane".

According to a preferred embodiment of the first aspect, the ion exchange membrane comprises at least one first polymer exhibiting acidic functional groups A, wherein the acidic functional group A is selected from the group consisting of $-SO_3H$, $-PO_3H_2$, -COOH, $-AsO_3H$, $-SeO_3H$ and $-C_6H_4OH$ (phenol). According to another preferred embodiment of the first aspect, the acidic functional group A is $-PO_3H_2$. According to a further preferred embodiment of the first aspect, the acidic functional group A is $-SO_3H$.

Polymers exhibiting $-SO_3H$ groups as acidic functional groups A can be conveniently prepared through known sulfonation reactions and allow for a high ion transport through the cell membrane. In other words, cell membranes comprising polymers exhibiting $-SO_3H$ groups provide for a low specific resistance and high ion exchange across the cell membrane.

According to a preferred embodiment of the first aspect, the ion exchange membrane comprises at least one first polymer exhibiting acidic functional groups A, wherein the at least one first polymer exhibiting acidic functional groups A exhibits one type of acidic functional groups A. In other words, all acidic functional groups A are the same within each of the at least one first polymer exhibiting acidic functional groups. In yet other words, each of the at least one first polymers exhibit one kind of acidic functional groups A. For example, one first polymer exhibits only $-SO_3H$ groups, and another first polymer exhibits only $-PO_3H_2$ groups.

According to another preferred embodiment of the first aspect, the ion exchange membrane comprises one first polymer exhibiting acidic functional groups A. According to a further preferred embodiment of the first aspect, the ion exchange membrane comprises one first polymer exhibiting one type of acidic functional groups A.

According to a preferred embodiment of the first aspect, the ion exchange membrane comprises at least one first polymer exhibiting acidic functional groups A, wherein the at least one first polymer exhibiting acidic functional groups A is selected from the group consisting of sulfonated polyphenylsulfone (sPPSU), sulfonated poly(ether ether

ketone) (sPEEK), sulfonated poly (ether ketone) (sPEK), and sulfonated polystyrene (PSS). According to another preferred embodiment of the first aspect, the at least one first polymer exhibiting acidic functional groups A is selected from the group consisting sulfonated polyphenylsulfone (sPPSU), sulfonated poly(ether ether ketone) (sPEEK), and sulfonated poly (ether ketone) (sPEK). According to a further preferred embodiment of the first aspect, the at least one first polymer exhibiting acidic functional groups A is sulfonated poly(ether ether ketone) (sPEEK).

According to a further preferred embodiment of the first aspect, the ion exchange membrane comprises one first polymer exhibiting acidic functional groups A, wherein the first polymer exhibiting acidic functional groups A is sulfonated poly(ether ether ketone) (sPEEK).

As shown in Example 3, ion exchange membranes comprising sulfonated poly(ether ether ketone) (sPEEK) have a particularly low specific resistance that is considerably lower than for polymer blend membranes. However, sPEEK membranes that are not supported with a fabric as described herein show poor dimensional stability, that is sPEEK-based membranes are particularly susceptible to swelling in high humidity conditions and to shrinking in low humidity conditions.

According to another preferred embodiment of the first aspect, the ion exchange membrane further comprises at least one second polymer exhibiting basic functional groups B.

According to another preferred embodiment of the first aspect, the at least one second polymer exhibiting basic functional groups B is selected from the group consisting of poly(vinylpyrrolidone) (PVP), fluorinated poly(benzimidazole) ($F_6$PBI), meta-polybenzimidazole (mPBI), and poly(4-vinyl-pyridine) (PVPy). According to another preferred embodiment of the first aspect, the at least one second polymer exhibiting basic functional groups B is poly(vinylpyrrolidone) (PVP). According to another preferred embodiment of the first aspect, the at least one second polymer exhibiting basic functional groups B is fluorinated poly(benzimidazole) ($F_6$PBI). According to another preferred embodiment of the first aspect, the at least one second polymer exhibiting basic functional groups B is meta-polybenzimidazole (mPBI). According to another preferred embodiment of the first aspect, the at least one second polymer exhibiting basic functional groups B is poly(4-vinyl-pyridine) (PVPy).

According to another preferred embodiment of the first aspect, the ion exchange membrane comprises the at least one first polymer exhibiting acidic functional groups A in an amount of 70 wt.-% or more based on the total weight of the ion exchange membrane. According to another preferred embodiment of the first aspect, the ion exchange membrane comprises the at least one first polymer exhibiting acidic functional groups A in an amount of 75 wt.-% or more based on the total weight of the ion exchange membrane. According to another preferred embodiment of the first aspect, the ion exchange membrane comprises the at least one first polymer exhibiting acidic functional groups A in an amount of 80 wt.-% or more. According to another preferred embodiment of the first aspect, the ion exchange membrane comprises the at least one first polymer exhibiting acidic functional groups A in an amount of 85 wt.-% or more based on the total weight of the ion exchange membrane. According to another preferred embodiment of the first aspect, the ion exchange membrane comprises the at least one first polymer exhibiting acidic functional groups A in an amount of 90 wt.-% or more based on the total weight of the ion exchange membrane. According to another preferred embodiment of the first aspect, the ion exchange membrane comprises the at least one first polymer exhibiting acidic functional groups A in an amount of 93 wt.-% or more based on the total weight of the ion exchange membrane. According to another preferred embodiment of the first aspect, the ion exchange membrane comprises the at least one first polymer exhibiting acidic functional groups A in an amount of 95 wt.-% or more based on the total weight of the ion exchange membrane. According to a further preferred embodiment of the first aspect, the ion exchange membrane comprises the at least one first polymer exhibiting acidic functional groups A in an amount of 97 wt.-% or more based on the total weight of the ion exchange membrane. According to a further preferred embodiment of the first aspect, the ion exchange membrane comprises the at least one first polymer exhibiting acidic functional groups A in an amount of about 98 wt.-% or more based on the total weight of the ion exchange membrane.

As shown in Example 3 of the present disclosure, it is preferable to prepare a cell membrane comprising a high amount of the at least one first polymer exhibiting acidic functional groups A in order for the cell membrane to have a low specific resistance.

According to another preferred embodiment of the first aspect, the ion exchange membrane comprises the at least one second polymer exhibiting basic functional groups B in an amount of 30 wt.-% or less based on the total weight of the ion exchange membrane. According to another preferred embodiment of the first aspect, the ion exchange membrane comprises the at least one second polymer exhibiting basic functional groups B in an amount of 25 wt.-% or less based on the total weight of the ion exchange membrane. According to another preferred embodiment of the first aspect, the ion exchange membrane comprises the at least one second polymer exhibiting basic functional groups B in an amount of 20 wt.-% or less based on the total weight of the ion exchange membrane. According to another preferred embodiment of the first aspect, the ion exchange membrane comprises the at least one second polymer exhibiting basic functional groups B in an amount of 15 wt.-% or less based on the total weight of the ion exchange membrane. According to another preferred embodiment of the first aspect, the ion exchange membrane comprises the at least one second polymer exhibiting basic functional groups B in an amount of 10 wt.-% or less based on the total weight of the ion

exchange membrane. According to another preferred embodiment of the first aspect, the ion exchange membrane comprises the at least one second polymer exhibiting basic functional groups B in an amount of 7 wt.-% or less based on the total weight of the ion exchange membrane. According to a further preferred embodiment of the first aspect, the ion exchange membrane comprises the at least one second polymer exhibiting basic functional groups B in an amount in the range of from 0 to 7 wt.-% based on the total weight of the ion exchange membrane. According to a further preferred embodiment of the first aspect, the ion exchange membrane comprises the at least one second polymer exhibiting basic functional groups B in an amount in the range of from 2 to 7 wt.-% based on the total weight of the ion exchange membrane.

The cell membrane

The first aspect of the present disclosure relates to a cell membrane. According to another preferred embodiment of the first aspect, the cell membrane comprises the fabric in an amount in the range of from about 20 wt.-% to about 70 wt.-% based on the total weight of the cell membrane. According to another preferred embodiment of the first aspect, the cell membrane comprises the fabric in an amount in the range of from about 30 wt.-% to about 60 wt.-% based on the total weight of the cell membrane. According to another preferred embodiment of the first aspect, the cell membrane comprises the fabric in an amount in the range of from about 35 wt.-% to about 60 wt.-% based on the total weight of the cell membrane. According to another preferred embodiment of the first aspect, the cell membrane comprises the fabric in an amount in the range of from about 40 wt.-% to about 60 wt.-% based on the total weight of the cell membrane. According to a further preferred embodiment of the first aspect, the cell membrane comprises the fabric in an amount in the range of from about 50 wt.-% to about 60 wt.-% based on the total weight of the cell membrane. If the amount of fabric in the cell membrane is too low, the cell membrane cannot be stabilized by the presence of the fabric, and, on the other hand, if the amount of fabric is too high, the resistance of the cell membrane increases to potentially unacceptable values.

According to another preferred embodiment of the first aspect, the cell membrane comprises the ion exchange membrane in an amount in the range of from about 30 wt.-% to about 80 wt.-% based on the total weight of the cell membrane. According to another preferred embodiment of the first aspect, the cell membrane comprises the ion exchange membrane in an amount in the range of from about 40 wt.-% to about 70 wt.-% based on the total weight of the cell membrane. According to another preferred embodiment of the first aspect, the cell membrane comprises the ion exchange membrane in an amount in the range of from about 40 wt.-% to about 65 wt.-% based on the total weight of the cell membrane. According to another preferred embodiment of the first aspect, the cell membrane comprises the ion exchange membrane in an amount in the range of from about 40 wt.-% to about 60 wt.-% based on the total weight of the cell membrane. According to a further preferred embodiment of the first aspect, the cell membrane comprises the ion exchange membrane in an amount in the range of from about 40 wt.-% to about 50 wt.-% based on the total weight of the cell membrane.

According to another preferred embodiment of the first aspect, the cell membrane has a swelling ratio in the range of from 0 to about 5 %. According to another preferred embodiment of the first aspect, the cell membrane has a swelling ratio in the range of from 0 to about 4 %. According to another preferred embodiment of the first aspect, the cell membrane has a swelling ratio in the range of from 0 to about 3 %. According to another preferred embodiment of the first aspect, the cell membrane has a swelling ratio in the range of from 0 to about 2 %. According to another preferred embodiment of the first aspect, the cell membrane has a swelling ratio in the range of from 0 to about 1.0 %. According to another preferred embodiment of the first aspect, the cell membrane has a swelling ratio in the range of from 0 to about 0.8 %. According to a further preferred embodiment of the first aspect, the cell membrane has a swelling ratio in the range of from 0 to about 0.7 %. According to a further preferred embodiment of the first aspect, the cell membrane has a swelling ratio even preferably in the range of from 0 to about 0.6 %. According to a yet further preferred embodiment of the first aspect, the cell membrane has a swelling ratio in the range of from 0.1 to about 1.0 %. According to an even further preferred embodiment of the first aspect, the cell membrane has a swelling ratio in the range of from 0.1 to about 0.8 %. According to an even further preferred embodiment of the first aspect, the cell membrane has a swelling ratio in the range of from 0.1 to about 0.6 %.

The swelling ratio of the cell membrane at a temperature of 40 °C ($SwR_{40}$) may be in the ranges as disclosed above. According to another preferred embodiment of the first aspect, the cell membrane has a shrinking ratio in the range of from about 0 % to 5.0 %. According to another preferred embodiment of the first aspect, the cell membrane has a shrinking ratio in the range of from about 0 % to 4.5 %. According to another preferred embodiment of the first aspect, the cell membrane has a shrinking ratio in the range of from about 0 % to 4.0 %. According to another preferred embodiment of the first aspect, the cell membrane has a shrinking ratio in the range of from about 0 % to 3.5 %. According to another preferred embodiment of the first aspect, the cell membrane has a shrinking ratio in the range of from about 0 % to 3.4 %. According to another preferred embodiment of the first aspect, the cell membrane has a shrinking ratio in the range of from about 0 % to 3.3 %. According to another preferred embodiment of the first aspect, the cell membrane has a shrinking ratio in the range of from about 0 % to 3.2 %. According to another preferred embodiment of the first

aspect, the cell membrane has a shrinking ratio in the range of from about 0 % to 3.1 %. According to a further preferred embodiment of the first aspect, the cell membrane has a shrinking ratio in the range of from about 0 % to about 3.0 %. According to a further preferred embodiment of the first aspect, the cell membrane has a shrinking ratio in the range of from about 0.1 % to 4.0 %. According to a further preferred embodiment of the first aspect, the cell membrane has a shrinking ratio in the range of from about 0.1 % to 3.5 %. According to a further preferred embodiment of the first aspect, the cell membrane has a shrinking ratio in the range of from about 0.1 % to 3.4 %. According to a further preferred embodiment of the first aspect, the cell membrane has a shrinking ratio in the range of from about 0.1 % to 3.3 %. According to a yet further preferred embodiment of the first aspect, the cell membrane has a shrinking ratio in the range of from about 0.1 % to 3.2 %. According to an even further preferred embodiment of the first aspect, the cell membrane has a shrinking ratio in the range of from about 0.1 % to 3.1 %. According to an even further preferred embodiment of the first aspect, the cell membrane has a shrinking ratio in the range of from about 0.1 % to 3.0 %.

The shrinking ratio of the cell membrane at a temperature of 40 °C ($ShR_{40}$) may be in the ranges as disclosed above. According to a preferred embodiment of the present disclosure, the cell membrane has a specific resistance of about 200 Ω cm or less. According to another preferred embodiment of the present disclosure, the cell membrane has a specific resistance of about 180 Ω cm or less. According to another preferred embodiment of the present disclosure, the cell membrane has a specific resistance of about 160 Ω cm or less. According to another preferred embodiment of the present disclosure, the cell membrane has a specific resistance of about 140 Ω cm or less. According to a further preferred embodiment of the present disclosure, the cell membrane has a specific resistance of about 120 Ω cm or less. According to a further preferred embodiment of the present disclosure, the cell membrane has a specific resistance of about 110 Ω cm or less.

## The method for manufacturing

According to a second aspect, the present disclosure relates to a method for manufacturing the cell membrane according to the first aspect, the method comprising the steps of providing a polymer solution comprising the at least one first polymer exhibiting acidic functional groups A in a solvent; providing a fabric, wherein the fabric comprises fibers, and wherein the surface of the fibers exhibits basic functional groups C; casting said polymer solution on top of the fabric, or casting said polymer solution onto a surface to yield a polymer film and placing the fabric on top of said polymer film to provide a coated fabric; and drying said coated fabric to provide the cell membrane.

According to one embodiment of the second aspect, the method for manufacturing the cell membrane according to the first aspect comprises the steps of

i) providing a polymer solution comprising the at least one first polymer exhibiting acidic functional groups A in a solvent;
ii) providing a fabric, wherein the fabric comprises fibers, and wherein the surface of the fibers exhibits basic functional groups C;
iii) casting said polymer solution on top of the fabric to provide a coated fabric; and
iv) drying said coated fabric to provide the cell membrane.

According to one embodiment of the second aspect, the method for manufacturing the cell membrane according to the first aspect comprises the steps of

i) providing a polymer solution comprising the at least one first polymer exhibiting acidic functional groups A in a solvent;
ii) providing a fabric, wherein the fabric comprises fibers, and wherein the surface of the fibers exhibits basic functional groups C;
iii) casting said polymer solution onto a surface to yield a polymer film and placing the fabric on top of said polymer film to provide a coated fabric; and
iv) drying said coated fabric to provide the cell membrane.

According to a preferred embodiment of the second aspect, step i) comprises dissolving the at least one first polymer exhibiting acidic functional groups A in a solvent to provide the polymer solution.

According to another preferred embodiment of the second aspect, step i) comprises dissolving the at least one first polymer exhibiting acidic functional groups A in a solvent to provide a first solution, and further dissolving the at least one second polymer exhibiting basic functional groups B in a solvent to provide a second solution, and mixing said first solution and said second solution to provide the polymer solution.

## The use of the cell membrane

According to a third aspect, the present disclosure relates to a use of the cell membrane according to the first aspect of the present disclosure in an electrodialysis cell, in a fuel cell, in a PEM electrolyzer, or in a redox flow battery.

According to a preferred embodiment of the third aspect, the present disclosure relates to the use of the cell membrane according to the first aspect of the present disclosure in an electrodialysis cell. According to another preferred embodiment of the third aspect, the present disclosure relates to the use of the cell membrane according to the first aspect of the present disclosure in a fuel cell. According to another preferred embodiment of the third aspect, the present disclosure relates to the use of the cell membrane according to the first aspect of the present disclosure in a PEM electrolyzer. According to a further preferred embodiment of the third aspect, the present disclosure relates to the use of the cell membrane according to the first aspect of the present disclosure in a redox flow battery.

## The device comprising a cell membrane

According to a fourth aspect, the present disclosure relates to a device comprising a cell membrane according to the first aspect of the present disclosure, wherein the device is an electrodialysis cell, a fuel cell, a PEM electrolyzer, or a redox flow battery.

According to a preferred embodiment of the fourth aspect, the device comprising the cell membrane according to the first aspect of the present disclosure is an electrodialysis cell. According to another preferred embodiment of the fourth aspect, the device comprising the cell membrane according to the first aspect of the present disclosure is a fuel cell. According to another preferred embodiment of the fourth aspect, the device comprising the cell membrane according to the first aspect of the present disclosure is a PEM electrolyzer. According to a further preferred embodiment of the fourth aspect, the device comprising the cell membrane according to the first aspect of the present disclosure is a redox flow battery.

## General embodiments and definitions

As used herein, the term "open surface of a fabric" refers to the portion of the total surface of a fabric that is not covered by a fiber. In other words, the open surface of a fabric is the surface that is between the fibers.

The total surface of a fabric $A_{total}$ is defined as the surface that lies within the edges of the fabric. Techniques for determining the total surface of the fabric are known to the skilled person. For example, if the fabric has the shape of a rectangle, the total surface of the fabric can be calculated as the length of the fabric times the width of the fabric.

The open surface of a fabric can be calculated by defining a square of the total area $A_{total}$, and subtracting the surface covered by a mesh/fibers $A_{mesh}$. This value is then given as the open surface of a fabric:

$$\text{open surface of a fabric} = \frac{A_{total} - A_{mesh}}{A_{total}} \times 100\ \%$$

For example, a square of 10 mm x 10 mm of a fabric can be defined. If 30 $mm^2$ of said square are covered by the mesh/fibers, the open surface of the fabric can be calculated as (100 $mm^2$ - 30 $mm^2$)/100 $mm^2$ = 70 %.

As used herein, the thicknesses of a fabric is determined by conventional means: The thicknesses of a fabric is determined by conventional means such as a gauge. In one embodiment, the thickness of a fabric is determined with a manual hand gauge from Hahn+Kolb with an accuracy of 0.001 mm. In one embodiment, the thickness of a fabric is determined with a magnetic-inductive gauge from ElectroPhysik with an accuracy of 0.0005 mm.

Alternatively, the thickness of a fabric is determined by a cross-section measurement under a microscope. Generally, the thickness of a fabric is defined as the distance between the intersections of the fibers in the fabric in the perpendicular direction to the surface of the fabric.

As used herein, the terms "primary imine" and "primary aldimine" are used interchangeably. As used herein, the terms "secondary imine" and "secondary aldimine" are used interchangeably.

($C_1$-$C_6$)-alkyl as used herein means a straight or branched hydrocarbon chain having 1, 2, 3, 4, 5, or 6 carbon atoms. Examples of ($C_1$-$C_6$)-alkyl are methyl, ethyl, 1-propyl, 2-propyl, n-butyl, sec-butyl, iso-butyl, tert-butyl, n-pentyl, iso-pentyl, n-hexyl, and iso-hexyl. Preferred embodiments of ($C_1$-$C_6$)-alkyl are methyl and ethyl.

As used herein, the term "coating" refers to a surface of a fiber that is at least partially, preferably completely, covered with a compound or a surface that is functionalized. In other words, the term "coating" as used herein includes the situation, in which the surface of a glass fiber is functionalized with an aminosilane.

As used herein, the term "aminosilane coating" refers to a surface that is functionalized with an aminosilane. In other words, the term "aminosilane coating" as used herein refers to a surface that is formed through a chemical

reaction of an aminosilane with a hydroxy group on the surface of a fiber.

As used herein, the "amount of coating with a compound comprising basic functional groups C based on the total weight of the fibers and the coating" is determined according to DIN ISO 1887. According to a preferred embodiment, the "amount of coating with a compound comprising basic functional groups C based on the total weight of the fibers and the coating" is determined according to DIN ISO 1887:2014-09.

As used herein, the term "total weight of the fibers and the coating" refers to the combined amount of the weight of the fibers plus the amount of the coating.

As used herein, the term "glass fiber with an aminosilane coating" refers to a glass fiber that has been reacted with an aminosilane. In other words, a "glass fiber with an aminosilane coating" as used herein exhibits at least one of the groups $\sim O\text{-}Si(OR^1)_2\text{-}(CH_2)_n\text{-}NH_2$, $(\sim O)_2\text{-}Si(OR^1)\text{-}(CH_2)_n\text{-}NH_2$, and/or $(\sim O)_3\text{-}Si\text{-}(CH_2)_n\text{-}NH_2$, wherein $R^1$ is a linear or branched $(C_1\text{-}C_6)$-alkyl, preferably ethyl, and wherein n is an integer in the range of from 2 to 5, preferably n is 3, and wherein "~O" is a group exhibited on the surface of the glass fiber.

As used herein, the "swelling ratio" (SwR) of a cell membrane is calculated as the length of the cell membrane at a relative humidity (x) above 50 % [length (cell membrane at x % rH)] minus the length of the cell membrane at a relative humidity of 50 % [length (cell membrane at 50 % rH)] divided by the length of the cell membrane at a relative humidity of 50 % [length (cell membrane at 50 % rH)]. In other words, the swelling ratio (SwR) of a cell membrane is calculated through the formula

$$\mathrm{SwR} = \frac{\text{length (cell membrane at x \% rH)} - \text{length (cell membrane at 50 \% rH)}}{\text{length (cell membrane at 50 \% rH)}} \cdot 100\ \%$$

In the context of the present disclosure, the swelling of a cell membrane refers to a dimensional change in one dimension, e.g., the length as described above. The swelling of a cell membrane may alternatively be calculated as an increase in thickness or width of the cell membrane in a similar fashion as described above. Unless otherwise specified, the swelling ratio disclosed herein refers to a change of length as described above.

The length of the cell membrane at 50 % relative humidity, which is also referred to as "length (cell membrane at 50 % rH)", is determined by placing a cell membrane in a climate chamber having a relative humidity of 50 % at 20 °C and measuring the length of the cell membrane by common means at a time point at which the length of the cell membrane does not change for at least 5 min. Means for measuring the length of the cell membrane are known to the skilled person, and can be a caliper, measuring tape, or ruler. Alternatively, a displacement sensor arrangement can be used. It is important to measure the length of a cell membrane at 50 % relative humidity at a time point at which the length of the cell membrane does not change for at least 5 min, because it is understood that the length of the cell membrane is dependent on the relative humidity and an equilibration time is needed.

The length of the cell membrane at a relative humidity (x) above 50 %, which is also referred to as "length (cell membrane at x % rH)", is determined by increasing the relative humidity in the climate chamber from 50 % to x % at 20 °C and measuring the length of the cell membrane by common means at a time point at which the length of the cell membrane does not change for at least 5 min. Means for measuring the length of the cell membrane are known to the skilled person, and can be a caliper, measuring tape, or ruler. Alternatively, a displacement sensor arrangement can be used. It is important to measure the length of a cell membrane at x % relative humidity at a time point at which the length of the cell membrane does not change for at least 5 min, because it is understood that the length of the cell membrane is dependent on the relative humidity and an equilibration time is needed.

As used herein, the "shrinking ratio" (ShR) of a cell membrane is calculated as absolute amount of the difference between the length of the cell membrane at a relative humidity (y) below 50 %[length (cell membrane at y % rH)] and the length of the cell membrane at a relative humidity of 50 %[length (cell membrane at 50 % rH)] divided by the length of the cell membrane at a relative humidity of 50 % [length (cell membrane at 50 % rH)]. In other words, the shrinking ratio (ShR) of a cell membrane is calculated through the formula

$$\mathrm{ShR} = \left| \frac{\text{length (cell membrane at y \% rH)} - \text{length (cell membrane at 50 \% rH)}}{\text{length (cell membrane at 50 \% rH)}} \cdot 100\ \% \right|$$

In the context of the present disclosure, the shrinking of a cell membrane refers to a dimensional change in one dimension, e.g., the length as described above. The shrinking of a cell membrane may alternatively be calculated as a decrease in thickness or width of the cell membrane in a similar fashion as described above. Unless otherwise specified, the shrinking ratio disclosed herein refers to a change of length as described above.

The length of the cell membrane at 50 % relative humidity, which is also referred to as "length (cell membrane at 50 % rH)", is determined by placing a cell membrane in a climate chamber having a relative humidity of 50 % at 20

°C and measuring the length of the cell membrane by common means at a time point at which the length of the cell membrane does not change for at least 5 min. Means for measuring the length of the cell membrane are known to the skilled person, and can be a caliper, measuring tape, or ruler. Alternatively, a displacement sensor arrangement can be used. It is important to measure the length of a cell membrane at 50 % relative humidity at a time point at which the length of the cell membrane does not change for at least 5 min, because it is understood that the length of the cell membrane is dependent on the relative humidity and an equilibration time is needed.

The length of the cell membrane at a relative humidity (y) below 50 %, which is also referred to as "length (cell membrane at y % rH)", is determined by decreasing the relative humidity in the climate chamber from 50 % to y % at 20 °C and measuring the length of the cell membrane by common means at a time point at which the length of the cell membrane does not change for at least 5 min. Means for measuring the length of the cell membrane are known to the skilled person, and can be a caliper, measuring tape, or ruler. Alternatively, a displacement sensor arrangement can be used. It is important to measure the length of a cell membrane at 20 % relative humidity at a time point at which the length of the cell membrane does not change for at least 5 min, because it is understood that the length of the cell membrane is dependent on the relative humidity and an equilibration time is needed.

The term "relative humidity" (rH) as used herein refers to the amount of water vapor present in air at 20 °C as a percentage of the amount of water vapor needed for saturation at 20 °C. In other words, the relative humidity is defined as the ratio of the partial pressure of water vapor in air at 20 °C to the saturation vapor pressure of water at 20 °C. The relative humidity is measured with a hygrometer. The relative humidity when measured at a temperature T other than 20 °C is referred to as $rH_T$. For example, when measured at 40 °C, the relative humidity is referred to as $rH_{40}$. Similarly, the ShR and SwR of the cell membrane when measured at a temperature T other than than 20 °C are referred to as $ShR_T$ and $SwR_T$, respectively. For example, when measured at 40 °C, the shrinking ratio and swelling ratio of the cell membrane are referred to as $ShR_{40}$ and $SwR_{40}$, respectively.

As used herein, "sPPSU" refers to sulfonated poly(phenylensulfone), also known under CAS 608146-33-4, having the following structural representation:

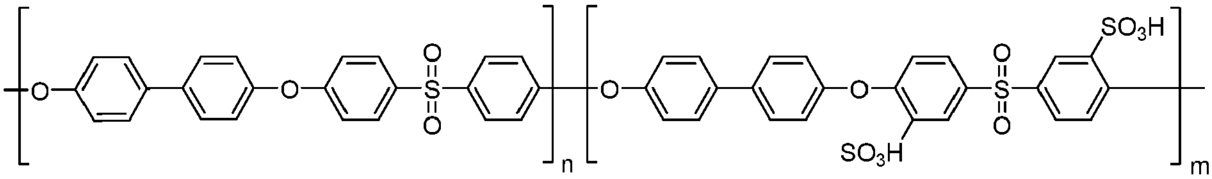

sPPSU

As used herein, "sPEK" refers to sulfonated poly(etherketone), having the following structural representation:

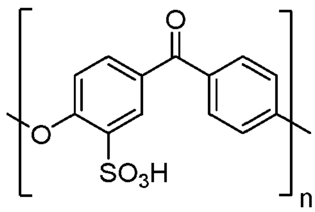

sPEK

sPEK may be obtained by the direct sulfonation of PEK.

As used herein, "sPEEK" refers to sulfonated poly(ether etherketone) having the following structural representation:

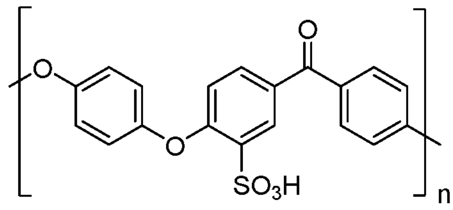

sPEEK

sPEEK may be obtained by the direct sulfonation of PEEK.

As used herein, "PSS" refers to poly(styrenesulfonate), also known under CAS 25704-18-1, having the following structural representation:

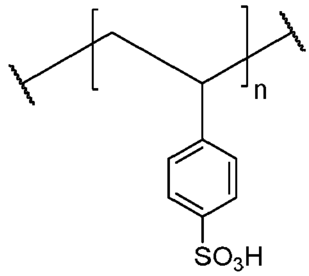

As used herein, the term "polymer exhibiting acidic functional groups A" refers to a polymer comprising a functional group including any one of $-SO_3H$, $-PO_3H_2$, -COOH, $-AsO_3H$, $-SeO_3H$ and/or $-C_6H_4OH$ (phenol), and salts thereof. In other words, a "polymer exhibiting acidic functional groups A" as used herein can comprise any one of the functional groups above, wherein the functional group is deprotonated. In such case, the proton can be replaced with a cation, such as an alkali or earth alkali cation, preferably $Na^+$ and/or $K^+$. In other words, the "polymer exhibiting acidic functional groups A" as used herein comprises a functional group including any one of $-SO_3Na$, $-SO_3K$, $-PO_3Na_2$, $-PO_3K_2$, -COONa, -COOK, $-AsO_3Na$, $-AsO_3K$, $-SeO_3Na$, $-SeO_3K$, $-C_6H_4ONa$, $-C_3H_4OK$, and/or the like.

As used herein, "PVP" refers to poly(vinylpyrrolidone), also known under CAS 9003-39-8.

As used herein, "PVPy" refers to poly(4-vinyl-pyridin), also known under CAS 25232-41-1.

As used herein, "F6PBI" refers to fluorinated poly(benzimidazole), also known under CAS 910484-73-0.

As used herein, "mPBI" refers to meta-poly(benzimidazole), also known under CAS 25928-81-8. m-PBI exhibits one repeating unit, wherein each repeating unit bears two basic benzimidazole groups:

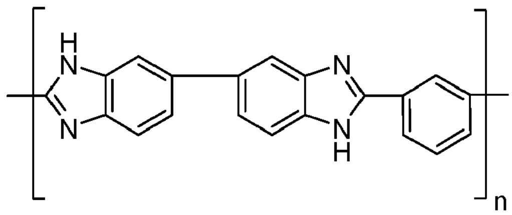

m-PBI

As used herein, "PPS" refers to poly(thio-1,4-phenylene), also known under CAS 25212-74-2 having the structural representation:

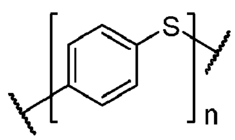

As used herein, "PE" refers to a polyester.

As used herein, "PI" refers to a polyimide.

As used herein, "GF" refers to glass fibers.

As used herein, the "burst strength" is determined with a burst strength device according to ISO 2758, version of December 2014, which may also be referred to as ISO 2758:2014.

As used herein, the specific resistance of a cell is measured with an Autolab PGSTAT 204 potentiostat/galvanostat (Metrohm, Switzerland) by potentiostatic electrochemical impedance spectroscopy (EIS) with an amplitude of 20 mV in the frequency range of 105 kHz - 10 Hz in a TSC Battery test cell (RHD Instruments, Germany) in a 0.1 M $H_2SO_4$ electrolyte solution.

Where the term "comprising" is used in the present description and claims, it does not exclude other elements. For the purposes of the present disclosure, the term "consisting of" is considered to be a preferred embodiment of the term "comprising". If a group is defined to comprise at least a certain number of embodiments herein, this is also to be understood to disclose a group, which preferably consists only of these embodiments. Furthermore, if a composition is defined using the term "comprising", it may additionally comprise other elements not explicitly listed, however, not further amounts of an element listed.

Where an indefinite or definite article is used when referring to a singular noun, e.g. "a", "an" or "the", this includes a plural of that noun unless specifically stated otherwise.

Terms like "obtainable" and "obtained" are used interchangeably. This, e.g., means that, unless the context clearly dictates otherwise, the term "obtained" does not mean to indicate that e.g. an embodiment must be obtained by e.g. the sequence of steps following the term "obtained" even though such a limited understanding is always included by the terms "obtained" as a preferred embodiment.

The term "about" in conjunction with a numerical value refers to normal deviations of said numerical value. It is to be understood that the term "about" can mean a deviation of ± 10 %, preferably ± 5 %, more preferably ± 2.5 % of said numeric value as indicated.

The ion exchange membranes of the present disclosure are mainly or exclusively composed of polymers. These polymers may exhibit acidic or basic functionality.

## EXAMPLES

### Example 1: Manufacture of a cell membrane

According to a general procedure for the manufacture of a cell membrane, a dry polymer exhibiting acidic functional groups A is dissolved in Dimethylsulfoxide (DMSO) or Dimethylacetamide (DMAc) at 50 - 80 °C to yield a 15 wt.-% solution of the polymer exhibiting acidic functional groups A. Separately, a dry polymer exhibiting basic functional groups B is dissolved in Dimethylsulfoxide (DMSO) or Dimethylacetamide (DMAc) at 80 - 180 °C to yield a 5 wt.-% solution of the polymer exhibiting basic functional groups B.

Before blending the two polymer solutions, each polymer solution is purified by filtration to separate the unsoluble particles. Afterwards the solutions are mixed and the resulting blend solution is stirred for additional 60 minutes at elevated temperatures (70 - 90 °C) to yield a homogeneous mixture.

The clear solution is casted on top of a woven glass fiber fabric having an aminosilane coating (obtained from Porcher Industries Germany GmbH; fabric VE120P, direct coating) or a comparative fabric (Sefar PEEK woven, Sefar PET, woven, or Hirose PPS nonwoven) or first on a hydrophobic substrate and then the reinforcement is placed on top of the casted and doctor-bladed polymer film (indirect coating). Finally, the cell membrane is dried at 80 - 100 °C for 3 - 5 minutes, then at 100 - 150 °C for 3 - 5 minutes, then at 130 - 180 °C for further 3-5 minutes. Thus cell membranes of the following compositions were obtained following this procedure:

**Table** 1 Composition of cell membranes

| No | Ion exchange membrane | | | | fabric | | |
|---|---|---|---|---|---|---|---|
| | polymer exhibiting acidic groups A | | polymer exhibiting basic groups B | | | | |
| | type | amount [wt.-%] | type | amount [wt.-%] | material | amount [wt.-%] | basic groups C present? |
| **1** | sPEEK | 100 | - | - | GF | 50 | Yes |
| **2** | sPEEK | 95 | mPBI | 5 | GF | 50 | Yes |
| **3** | sPEEK | 71 | PVP | 29 | GF | 50 | Yes |
| | | | | | | | |

(continued)

| No | Ion exchange membrane | | | | fabric | | |
|---|---|---|---|---|---|---|---|
| | polymer exhibiting acidic groups A | | polymer exhibiting basic groups B | | | | |
| | type | amount [wt.-%] | type | amount [wt.-%] | material | amount [wt.-%] | basic groups C present? |
| | | | | | | | |
| **C1** | sPEEK | 95 | mPBI | 5 | - | 0 | no |
| **C2** | sPEEK | 90 | mPBI | 10 | PPS | 55 | No |
| **C3** | sPEEK | 100 | - | - | PE | 30 | No |
| **C4** | sPEEK | 100 | - | - | - | 0 | No |
| **C5** | PFSA | 100 | - | - | - | 0 | No |
| GF: glass fibers; C3: commercially available membrane "E620PE" obtained from Fumatech; C4: commercially available membrane "E620K" obtained from Fumatech, C5: commercially available PFSA membrane "Nafion"; C1 to C5 are comparative ion exchange membranes. | | | | | | | |

Before testing or further use, the cell membrane is removed from the glass-plate or substrate. If the membrane adheres strongly to the surface, a little bit of water may be added to aid detachment.

**Example 2: Mechanical characterization of the cell membrane**

The cell membranes prepared according to Example 1 show high stability to pressure gradient as was determined with a burst strength device according to ISO 2758:2014. The cell membranes according to the present disclosure show at least a 4 - 6 times higher burst pressure value than comparative membranes without the fabric supporting the ion exchange membrane:

**Table 2** Results obtained from measurement of burst strength

| **No** | Burst pressure [bar] |
|---|---|
| **2** | 5.86 |
| **3** | 6.33 |
| **C1** | 1.45 |
| **C3** | 1.70 |
| **C4** | 1.42 |
| **C5** | 1.29* |
| * no bursting was observed, but elongated membrane | |

**Example 3: Electrochemical impedance**

The specific resistance of the cell membranes manufactured as described in Example 1 was measured using an Autolab PGSTAT 204 potentiostat/galvanostat (Metrohm, Switzerland) by potentiostatic electrochemical impedance spectroscopy (EIS) with an amplitude of 20 mV in the frequency range of 105 kHz - 10 Hz in a TSC Battery test cell (RHD Instruments, Germany) in a 0.1 M $H_2SO_4$ electrolyte solution. The test cell used has an active membrane area of 38 $mm^2$ . Prior to the experiments, the cell membranes were placed in the 0.1 M $H_2SO_4$ electrolyte solution for at least 24 hours for conditioning.

Surprisingly, the specific resistance for the cell membranes according to the present disclosure remained at acceptable levels, despite having fabric supporting the ion exchange membrane.

**Table 3** Results obtained from measurement of resistance

| No | Specific Resistance ($R_{sp}$) [$\Omega\cdot$cm] | Conductivity ($1/R_{sp}$) [mS/cm] |
|---|---|---|
| **1** | 109 | 9.2 |
| **2** | 114 | 8.8 |
| **3** | 243 | 4.1 |
| **C1** | 126 | 7.9 |
| **C3** | 15 | 67 |
| **C4** | 77 | 13 |
| **C5** | 17 | 59 |

**Example 4: Measurement of dimensional stability**

For the evaluation of dimensional stability upon changes in relative humidity, the cell membranes as prepared in Example 1 were cut into pieces of 266 mm x 50 mm and connected to a plate for measurement of the length of the cell membrane in an automated a displacement sensor to give a specimen of 300 mm in total. The length of the test specimen after specimen preparation was 250 mm at 50 % relative humidity.

The test specimens described above are firmly fixed in the device at the top and firmly connected to the movable carriage of the displacement sensor at the bottom end via a plastic screw. The weight of the sensor carriage is approx. 30 g. The width of the specimen is chosen so that the weight of the sensor carriage does not cause a permanent deformation of the specimen.

The samples were placed in a climate chamber at a temperature of 20 °C, and relative humidity of 50 %, the climate chamber was closed, and the specimen was allowed to dwell for 1 h. Then, the test sequence is started, and the humidity is varied in the range of 10 to 97 % relative humidity as shown in Fig. 1: The relative humidity was increased in steps of 10 % (10 % increase of relative humidity within one hour followed by a dwell time of 1h at constant humidity) to 90 % relative humidity. In a last step, the relative humidity was further increased to 97 % relative humidity. The cell membrane was allowed to dwell at 97 % relative humidity for 2 h until the displacement sensor indicated no further change in length.

Subsequently, the relative humidity was gradually reduced to 20% in the steps of 10 % (10 % decrease of relative humidity within one hour followed by a dwell time of 1 h at constant humidity) as shown in Fig. 1.

After reaching 20 % relative humidity and a holding time of 2 h until the displacement sensor indicated no change in length of the specimen, the humidity was increased again in steps of 10 % up to 97 % to then be then decreased in steps of 10 % to 10 % relative humidity as shown, e.g., in Fig. 1. After reaching 10 % relative humidity, the humidity was again increased to 50 % relative humidity in the same manner as above. Then, the cycle was repeated. The temperature was kept constant at 20 °C throughout both cycles.

Throughout the course of the experiments, the length of the test specimens were measured continuously by the displacement sensor. The results are shown in Figures 1 to 10 and summarized in table 4.

**Table** 4 Results obtained from measurement of dimensional stability

| No | Δ length at relative humidity of 20 % [mm] | Δ length at relative humidity of 97 % [mm] | Reinforcement |
|---|---|---|---|
| **1** | ~ -1 | ~ +0,5 | Yes (glass fibers) |
| **2** | ~ -2 | ~ +0,8 | Yes (glass fibers) |
| **3** | ~ -7,5 / -6 | ~ +1,5 | Yes (glass fibers) |
| **C1** | ~ -9 | ~ +3 up to +6 | No |
| **C2** | ~ -6 up to -7 | ~ +2 | Yes (PPS-woven) |
| **C3** | ~ -8 | ~ +1 | Yes (PE-nonwoven) |
| **C4** | ~ -1 | ~ +8 | No |
| **C5** | ~ -4 | ~ +14 | No |
| Δ length at relative humidity of 20 % = length (cell membrane at 20 % rH) - length (cell membrane at 50 % rH)<br>Δ length at relative humidity of 97 % = length (cell membrane at 97 % rH) - length (cell membrane at 50 % rH) | | | |

It can be concluded from table 4, membranes containing a fabric show a significantly reduced swelling in a humid environment (i.e., at 97 % rH), and significantly reduced shrinking in dry environment (i.e., at 20 % rH). Surprisingly, the reduction in both swelling and shrinking is even more pronounced when the membranes contain a fabric exhibiting basic functional groups C.

## EMBODIMENTS

The present disclosure also pertains to the following numbered embodiments:

1. A cell membrane comprising

a) an ion exchange membrane comprising at least one first polymer exhibiting acidic functional groups A, and
b) a fabric,

wherein the fabric comprises fibers, and wherein the surface of the fibers exhibits basic functional groups C, and wherein the fabric supports the ion exchange membrane.

2. The cell membrane according to embodiment 1, wherein the acidic groups A of the at least one first polymer is selected from the group consisting of $-SO_3H$, $-PO_3H$, $-PO_3H_2$, -COOH, $-AsO_3H$, $-SeO_3H$ and/or $-C_3H_4OH$, preferably wherein the acidic group is $-SO_3H$ or-$PO_3H$, more preferably $-SO_3H$.

3. The cell membrane according to embodiment 1 or 2, wherein the at least one first polymer exhibiting acidic functional groups A is selected from the group consisting of sulfonated polyphenylsulfone (sPPSU), sulfonated poly(ether ether ketone) (sPEEK), sulfonated poly (ether ketone) (sPEK), and sulfonated polystyrene (PSS),

preferably wherein the at least one first polymer is selected from the group consisting of sulfonated polyphenylsulfone (sPPSU), sulfonated poly(ether ether ketone) (sPEEK), and sulfonated poly (ether ketone) (sPEK), further preferably wherein the at least one first polymer is sulfonated poly(ether ether ketone) (sPEEK).

4. The cell membrane according to any one of the preceding embodiments, wherein the fabric is a woven or non-woven fabric.

5. The cell membrane according to any one of the preceding embodiments, wherein the basic functional groups C of the fibers are amine groups or imine groups, preferably primary amine groups, or secondary amine groups, or tertiary amine groups, or primary imine groups, more preferable primary amine groups.

6. The cell membrane according to any one of the preceding embodiments, wherein the fibers comprise

a) a polymer comprising basic functional groups C, preferably poly(allylamine), poly(N-methylvinylamine), or poly(dimethylvinylamine); and/or
b) a coating with a compound comprising basic functional groups C, preferably an aminosilane coating.

7. The cell membrane according to any one of the preceding embodiments, wherein the fibers comprises a polymer selected from the group consisting of polyester (PE), polyimide (PI), poly(thio-1,4-phenylene) (PPS); or wherein the fibers comprises glass fibers.

8. The cell membrane according to any one of the preceding embodiments, wherein the fabric comprises glass fibers coated with a compound comprising basic functional groups C, preferably wherein the fabric comprises glass fibers coated with an aminosilane.

9. The cell membrane according to any one of the preceding embodiments, wherein the ion exchange membrane further comprises at least one second polymer exhibiting basic functional groups B.

10. The cell membrane according to embodiment 7, wherein the at least one second polymer exhibiting basic functional groups B is selected from the group consisting of poly(vinylpyrrolidone) (PVP), fluorinated poly(benzimidazole) ($F_6$PBI), meta-polybenzimidazole (mPBI), and poly(4-vinyl-pyrodone) (PVPy).

11. The cell membrane according to any one of the preceding embodiments, wherein the ion exchange membrane

comprises the at least one first polymer exhibiting acidic functional groups A in an amount of 70 wt.-% or more, preferably in an amount of 75 wt.-% or more, more preferably 80 wt.-% or more, more preferably 85 wt.-% or more, yet more preferable 90 wt.-% or more, yet more preferably 93 wt.-% or more, even more preferably 95 wt.-% or more, still more preferable 97 wt.-% or more, most preferably about 98 wt.-% or more, each based on the total weight of the ion exchange membrane.

12. The cell membrane according to any one of preceding embodiments 7 to 8, wherein the ion exchange membrane comprises the at least one second polymer exhibiting basic functional groups B in an amount of about 30 wt.-% or less, preferably 25 wt.-% or less, more preferably 20 wt.-% or less, more preferably 15 wt.-% or less, yet more preferably in an amount of 10 wt.-% or less, still more preferably 7 wt.-% or less, most preferably in an amount in the range of from 0 to 7 wt.-% or in an amount in the range of from 2 to 7 wt.-% each based on the total weight of the ion exchange membrane.

13. The cell membrane according to any one of the preceding embodiments, wherein the cell membrane has a swelling ratio (SwR) in the range of from 0 % to about 5 %, preferably in the range of from 0 % to about 3 %, more preferably in the range of from 0 % to about 1.0 %, more preferably in the range of from 0 % to about 0.8 %, more preferably in the range of from 0 % to about 0.6 %, more preferably in the range of from 0.1 % to about 1.0 %, yet more preferably in the range of from 0.1 % to about 0.8 %, most preferably in the range of from 0.1 % to about 0.6 %, wherein
the swelling ratio (SwR) of the cell membrane is calculated through the formula

$$\mathrm{SwR} = \frac{\text{length (cell membrane at x \% rH)} - \text{length (cell membrane at 50 \% rH)}}{\text{length (cell membrane at 50 \% rH)}} \cdot 100\,\%.$$

14. The cell membrane according to any one of the preceding embodiments, wherein the cell membrane has a shrinking ratio (ShR) in the range of from about 0 % to 4.0 %, preferably in the range of from about 0 % to 3.5 %, more preferably in the range of from about 0 % to 3.3 %, more preferably in the range of from about 0 % to 3.1 %, more preferably in the range of from about 0 % to 3.0 %, more preferably in the range of from about 0.1 % to 4.0 %, yet more preferably in the range of from about 0.1 % to about 3.5 %, even more preferably in the range of from about 0.1 % to 3.3 %, still more preferably in the range of from about 0.1 % to 3.1 %, most preferably in the range of from about 0.1 % to 3.0 %, wherein
the shrinking ratio (ShR) is calculated through the formula

$$\mathrm{ShR} = \left| \frac{\text{length (cell membrane at y \% rH)} - \text{length (cell membrane at 50 \% rH)}}{\text{length (cell membrane at 50 \% rH)}} \cdot 100\,\% \right|.$$

15. The cell membrane according to any one of the preceding embodiments, wherein the cell membrane has a specific resistance of about 200 Ω·cm or less, preferably about 180 Ω·cm or less, more preferably about 160 Ω·cm or less, yet more preferably about 140 Ω·cm or less, even more preferably about 120 Ω·cm or less, most preferably about 110 Ω·cm or less.

16. The cell membrane according to any one of the preceding embodiments, wherein the fabric has a thickness in the range of from about 10 to about 300 μm, preferably of from about 10 to about 200 μm, more preferably from about 10 to about 100 μm, more preferably of from about 10 to about 60 μm, even more preferably of from about 15 to about 40 μm, most preferably of from about 20 to about 30 μm.

17. Method for manufacturing the cell membrane according to any one of embodiments 1 to 0 comprising the steps of

i) providing a polymer solution comprising the at least one first polymer exhibiting acidic functional groups A in a solvent;
ii) providing a fabric, wherein the fabric comprises fibers, and wherein the surface of the fibers exhibits basic functional groups C;
iii) casting said polymer solution on top of the fabric, or casting said polymer solution onto a surface to yield a polymer film and placing the fabric on top of said polymer film to provide a coated fabric; and
iv) drying said coated fabric to provide the cell membrane.

18. The method according to embodiment 12, wherein step i) comprises dissolving the at least one first polymer exhibiting acidic functional groups A in a solvent to provide a first solution, optionally dissolving the at least one second polymer exhibiting basic functional groups B in a solvent to provide a second solution, and mixing said first solution and said second solution to provide the polymer solution.

19. Use of the cell membrane according to any one of embodiments 1 to 0 in an electrodialysis cell, in a fuel cell, in a PEM electrolyzer, or in a redox flow battery, preferably in a redox flow battery.

20. Device comprising a cell membrane according to any one of embodiments 1 to 0,
wherein the device is an electrodialysis cell, a fuel cell, a PEM electrolyzer, or a redox flow battery, preferably a redox flow battery.

**Claims**

1. A cell membrane comprising

a) an ion exchange membrane comprising at least one first polymer exhibiting acidic functional groups A, and
b) a fabric,
wherein the fabric comprises fibers, and wherein the surface of the fibers exhibits basic functional groups C, and wherein the fabric supports the ion exchange membrane.

2. The cell membrane according to claim 1, wherein the acidic groups A of the at least one first polymer is selected from the group consisting of $-SO_3H$, $-PO_3H$, $-PO_3H_2$, -COOH, $-AsO_3H$, $-SeO_3H$ and/or $-C_3H_4OH$, preferably wherein the acidic group is $-SO_3H$ or-$PO_3H$, more preferably $-SO_3H$.

3. The cell membrane according to claim 1 or 2, wherein the at least one first polymer exhibiting acidic functional groups A is selected from the group consisting of sulfonated polyphenylsulfone (sPPSU), sulfonated poly(ether ether ketone) (sPEEK), sulfonated poly (ether ketone) (sPEK), and sulfonated polystyrene (PSS),

preferably wherein the at least one first polymer is selected from the group consisting of sulfonated polyphenylsulfone (sPPSU), sulfonated poly(ether ether ketone) (sPEEK), and sulfonated poly (ether ketone) (sPEK), further preferably wherein the at least one first polymer is sulfonated poly(ether ether ketone) (sPEEK).

4. The cell membrane according to any one of the preceding claims, wherein the basic functional groups C of the fibers are amine groups or imine groups, preferably primary amine groups, or secondary amine groups, or tertiary amine groups, or primary imine groups, more preferable primary amine groups.

5. The cell membrane according to any one of the preceding claims, wherein the fibers comprise

a) a polymer comprising basic functional groups C, preferably poly(allylamine), poly(N-methylvinylamine), or poly(dimethylvinylamine); and/or
b) a coating with a compound comprising basic functional groups C, preferably an aminosilane coating.

6. The cell membrane according to any one of the preceding claims, wherein the fibers comprises a polymer selected from the group consisting of polyester (PE), polyimide (PI), poly(thio-1,4-phenylene) (PPS); or wherein the fibers comprises glass fibers; and/or wherein the fabric comprises glass fibers coated with a compound comprising basic functional groups C, preferably wherein the fabric comprises glass fibers coated with an aminosilane.

7. The cell membrane according to any one of the preceding claims, wherein the ion exchange membrane further comprises at least one second polymer exhibiting basic functional groups B, preferably
wherein the at least one second polymer exhibiting basic functional groups B is selected from the group consisting of poly(vinylpyrrolidone) (PVP), fluorinated poly(benzimidazole) ($F_6$PBI), meta-polybenzimidazole (mPBI), and poly(4-vinyl-pyrodone) (PVPy).

8. The cell membrane according to any one of the preceding claims, wherein the ion exchange membrane comprises the at least one first polymer exhibiting acidic functional groups A in an amount of 70 wt.-% or more, preferably in an amount of 75 wt.-% or more, more preferably 80 wt.-% or more, more preferably 85 wt.-% or more, yet more

preferable 90 wt.-% or more, yet more preferably 93 wt.-% or more, even more preferably 95 wt.-% or more, still more preferable 97 wt.-% or more, most preferably about 98 wt.-% or more, each based on the total weight of the ion exchange membrane.

**9.** The cell membrane according to any one of preceding claims 7 to 8, wherein the ion exchange membrane comprises the at least one second polymer exhibiting basic functional groups B in an amount of about 30 wt.-% or less, preferably 25 wt.-% or less, more preferably 20 wt.-% or less, more preferably 15 wt.-% or less, yet more preferably in an amount of 10 wt.-% or less, still more preferably 7 wt.-% or less, most preferably in an amount in the range of from 0 to 7 wt.-% or in an amount in the range of from 2 to 7 wt.-% each based on the total weight of the ion exchange membrane.

**10.** The cell membrane according to any one of the preceding claims, wherein the cell membrane has a swelling ratio (SwR) in the range of from 0 % to about 5 %, preferably in the range of from 0 % to about 3 %, more preferably in the range of from 0 % to about 1.0 %, more preferably in the range of from 0 % to about 0.8 %, more preferably in the range of from 0 % to about 0.6 %, more preferably in the range of from 0.1 % to about 1.0 %, yet more preferably in the range of from 0.1 % to about 0.8 %, most preferably in the range of from 0.1 % to about 0.6 %, wherein

the swelling ratio (SwR) of the cell membrane is calculated through the formula

$$\mathrm{SwR} = \frac{\text{length (cell membrane at x \% rH)} - \text{length (cell membrane at 50 \% rH)}}{\text{length (cell membrane at 50 \% rH)}} \cdot 100\ \%;$$

and/or
wherein the cell membrane has a shrinking ratio (ShR) in the range of from about 0 % to 4.0 %, preferably in the range of from about 0 % to 3.5 %, more preferably in the range of from about 0 % to 3.3 %, more preferably in the range of from about 0 % to 3.1 %, more preferably in the range of from about 0 % to 3.0 %, more preferably in the range of from about 0.1 % to 4.0 %, yet more preferably in the range of from about 0.1 % to about 3.5 %, even more preferably in the range of from about 0.1 % to 3.3 %, still more preferably in the range of from about 0.1 % to 3.1 %, most preferably in the range of from about 0.1 % to 3.0 %, wherein
the shrinking ratio (ShR) is calculated through the formula

$$\mathrm{ShR} = \left| \frac{\text{length (cell membrane at y \% rH)} - \text{length (cell membrane at 50 \% rH)}}{\text{length (cell membrane at 50 \% rH)}} \cdot 100\ \% \right|.$$

**11.** The cell membrane according to any one of the preceding claims, wherein the cell membrane has a specific resistance of about 200 Ω·cm or less, preferably about 180 Ω·cm or less, more preferably about 160 Ω·cm or less, yet more preferably about 140 Ω·cm or less, even more preferably about 120 Ω·cm or less, most preferably about 110 Ω·cm or less; and/or
wherein the fabric has a thickness in the range of from about 10 to about 300 μm, preferably of from about 10 to about 200 μm, more preferably from about 10 to about 100 μm, more preferably of from about 10 to about 60 μm, even more preferably of from about 15 to about 40 μm, most preferably of from about 20 to about 30 μm.

**12.** Method for manufacturing the cell membrane according to any one of claims 1 to 11 comprising the steps of

i) providing a polymer solution comprising the at least one first polymer exhibiting acidic functional groups A in a solvent;
ii) providing a fabric, wherein the fabric comprises fibers, and wherein the surface of the fibers exhibits basic functional groups C;
iii) casting said polymer solution on top of the fabric, or casting said polymer solution onto a surface to yield a polymer film and placing the fabric on top of said polymer film to provide a coated fabric; and
iv) drying said coated fabric to provide the cell membrane.

**13.** The method according to claim 12, wherein step i) comprises dissolving the at least one first polymer exhibiting acidic functional groups A in a solvent to provide a first solution, optionally dissolving the at least one second polymer exhibiting basic functional groups B in a solvent to provide a second solution, and mixing said first solution and said second solution to provide the polymer solution.

**14.** Use of the cell membrane according to any one of claims 1 to 11 in an electrodialysis cell, in a fuel cell, in a PEM electrolyzer, or in a redox flow battery, preferably in a redox flow battery.

**15.** Device comprising a cell membrane according to any one of claims 1 to 11, wherein the device is an electrodialysis cell, a fuel cell, a PEM electrolyzer, or a redox flow battery, preferably a redox flow battery.

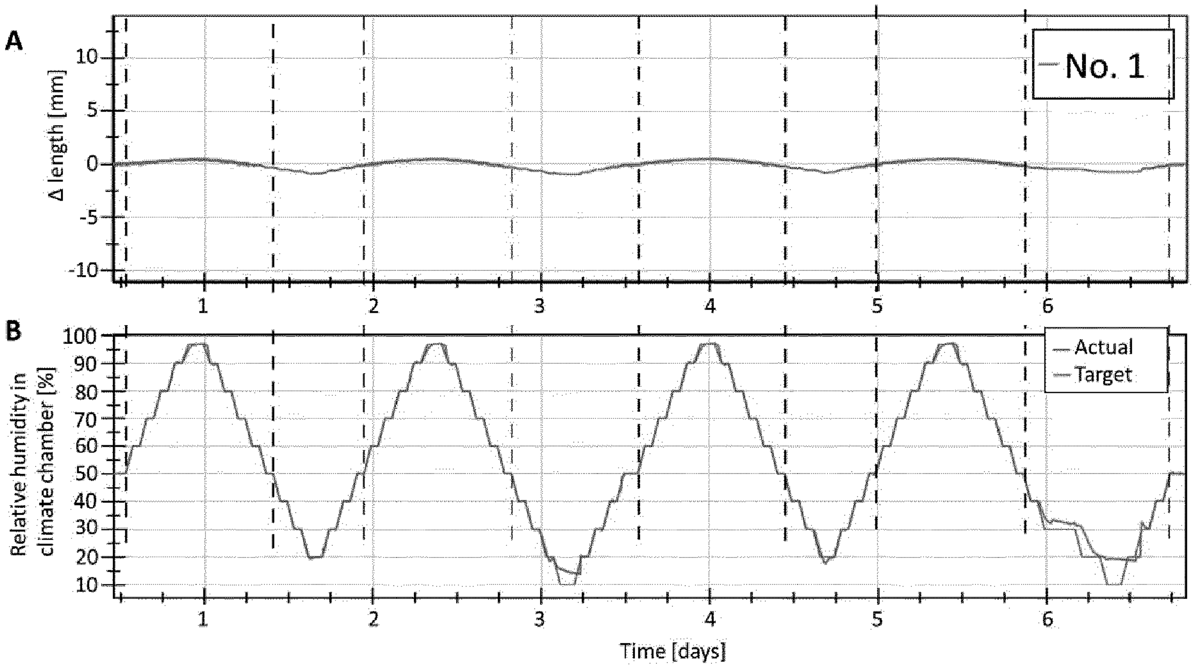
A
B
No. 1
Δ length [mm]
Relative humidity in climate chamber [%]
Actual
Target
Time [days]

Fig.1

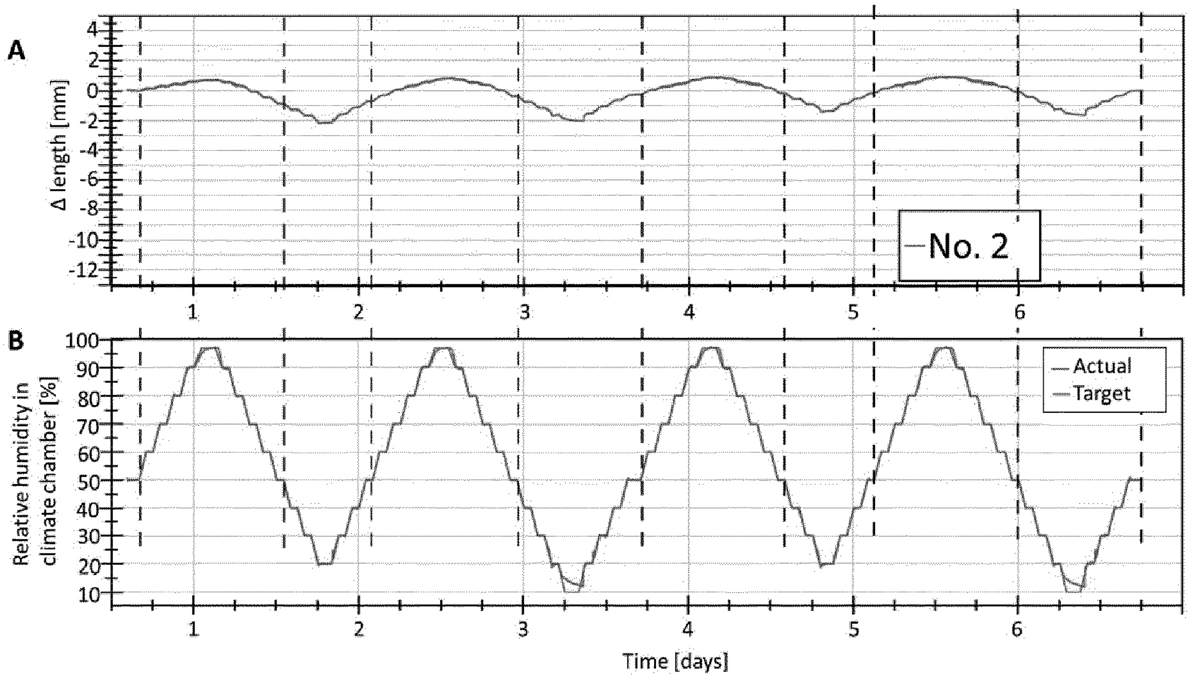
A
B
No. 2
Δ length [mm]
Relative humidity in climate chamber [%]
Actual
Target
Time [days]

Fig. 2

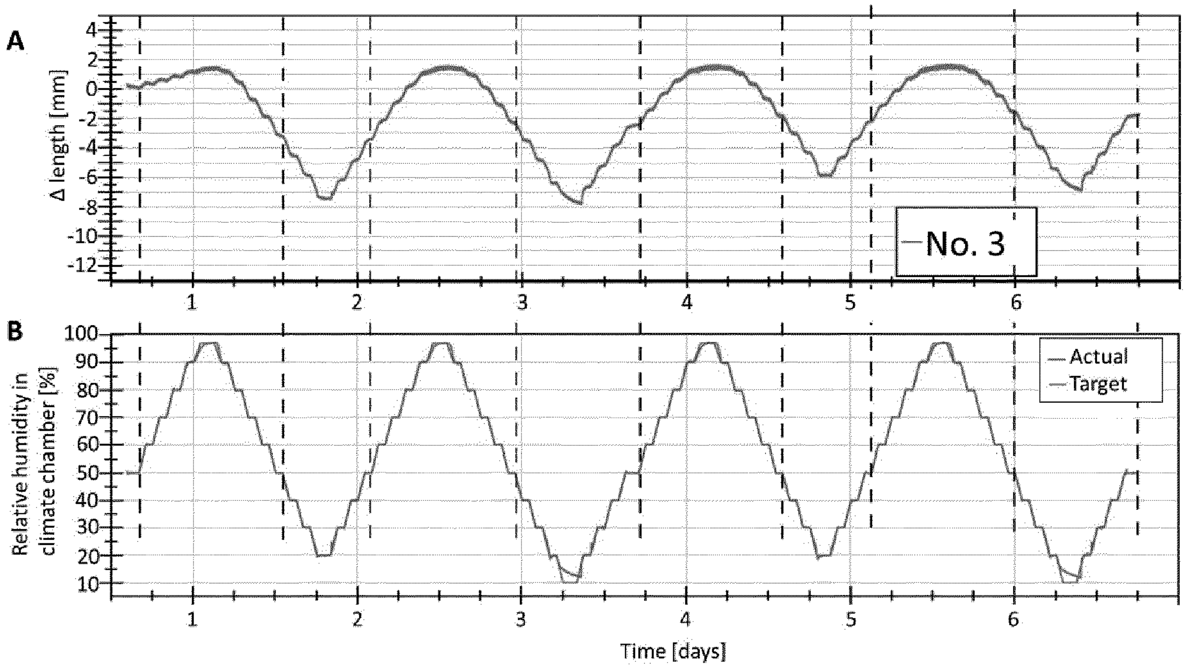
A
Δ length [mm]
4
2
0
-2
-4
-6
-8
-10
-12
No. 3
1
2
3
4
5
6
B
Relative humidity in climate chamber [%]
100
90
80
70
60
50
40
30
20
10
Actual
Target
Time [days]

Fig. 3

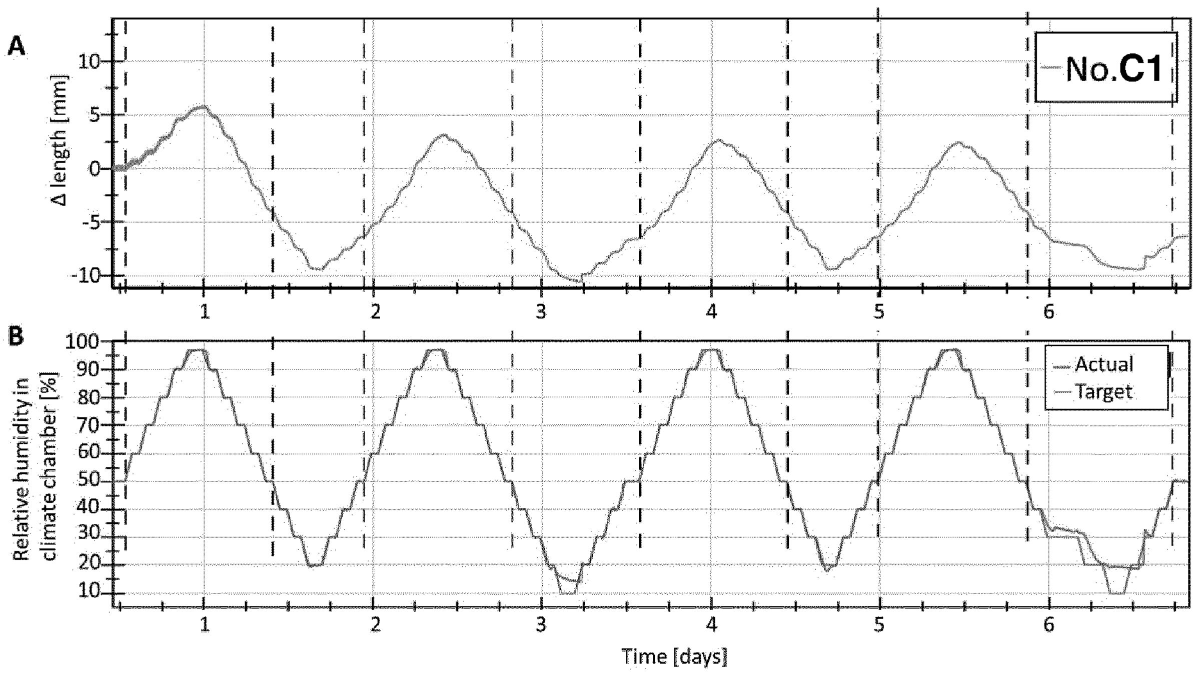
A
Δ length [mm]
10
5
0
-5
-10
No.C1
1
2
3
4
5
6
B
Relative humidity in climate chamber [%]
100
90
80
70
60
50
40
30
20
10
Actual
Target
Time [days]

Fig. 4

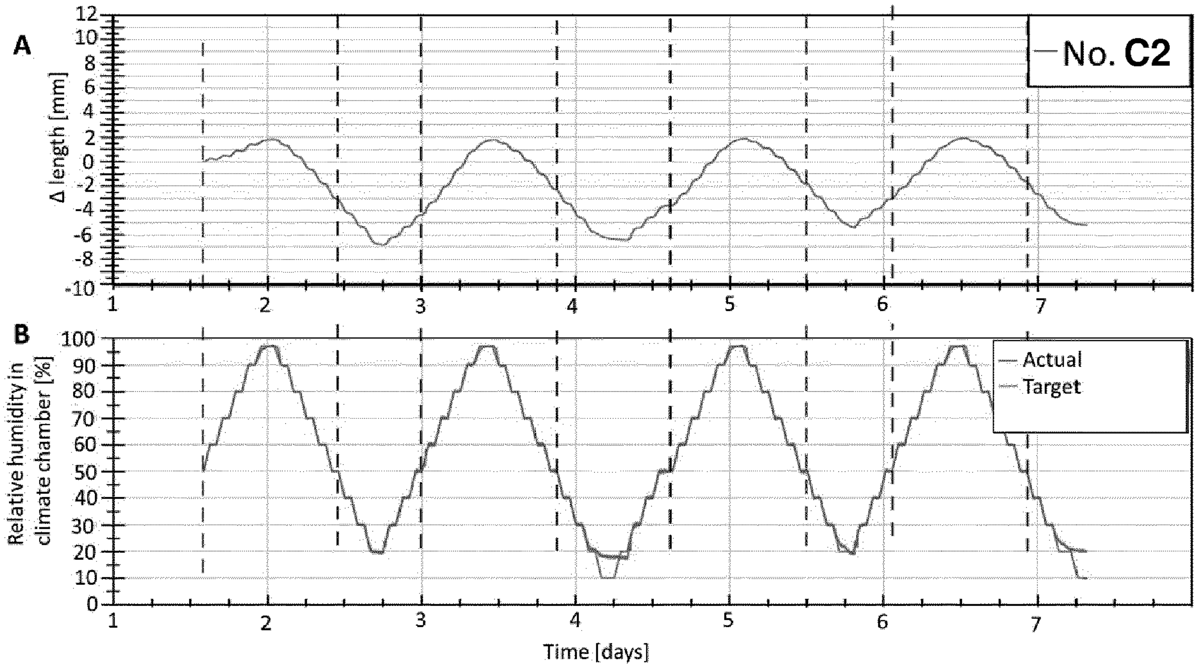
A
B
No. C2
Δ length [mm]
Relative humidity in climate chamber [%]
Actual
Target
Time [days]

Fig. 5

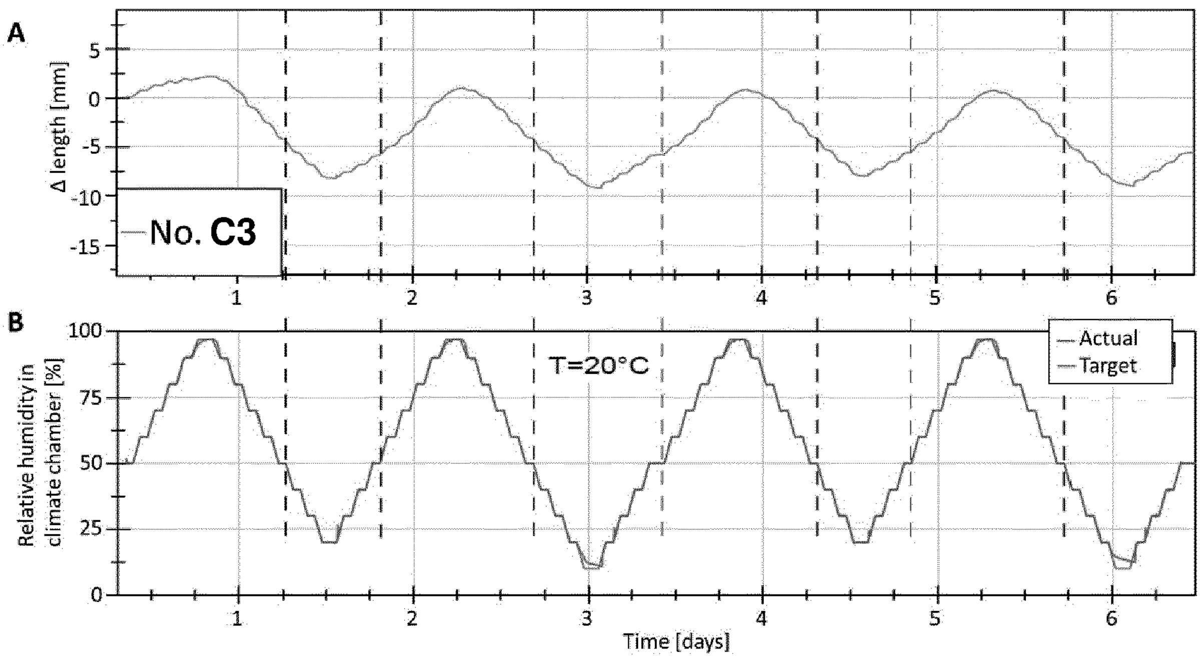
A
B
No. C3
Δ length [mm]
Relative humidity in climate chamber [%]
T=20°C
Actual
Target
Time [days]

Fig. 6

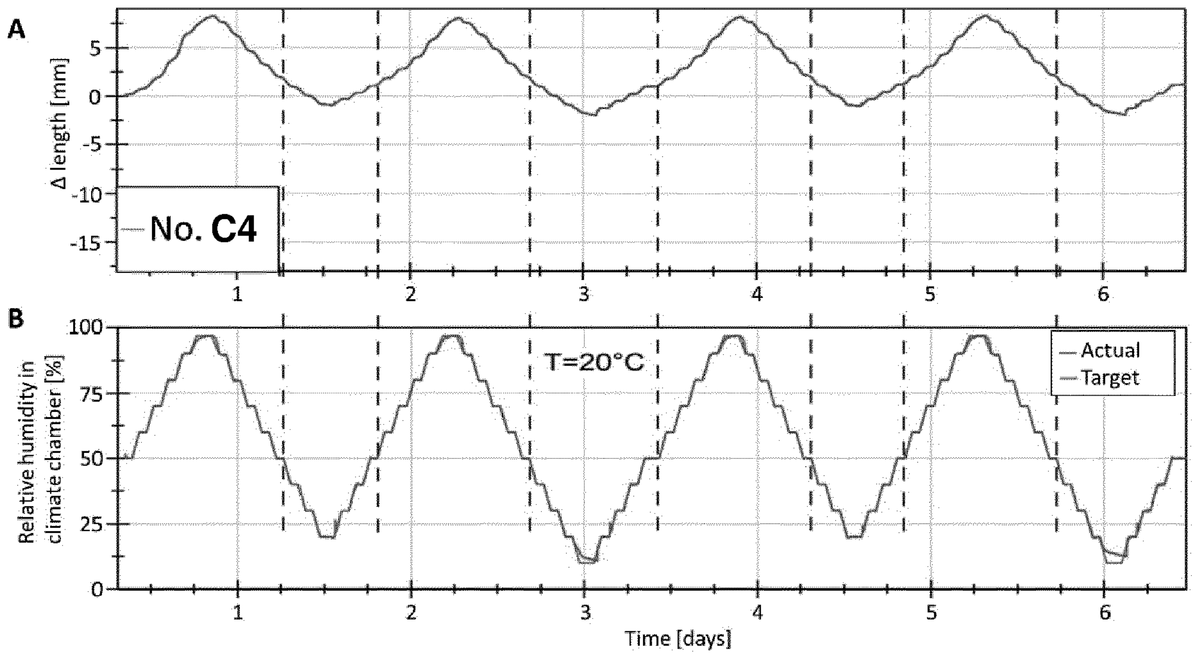
A
Δ length [mm]
No. C4
B
Relative humidity in climate chamber [%]
T=20°C
Actual
Target
Time [days]

Fig. 7

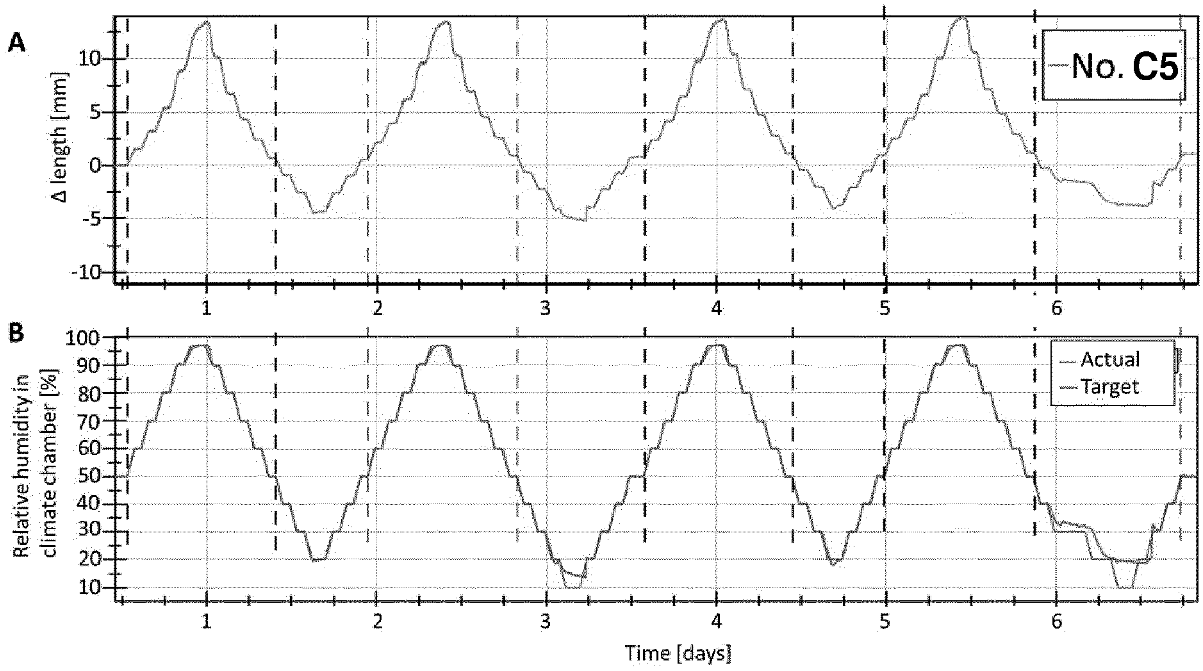
A
Δ length [mm]
No. C5
B
Relative humidity in climate chamber [%]
Actual
Target
Time [days]

Fig. 8

Europäisches Patentamt
European Patent Office
Office européen des brevets

# EUROPEAN SEARCH REPORT

Application Number
EP 23 17 3159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/014432 A1 (JAIN MUKESH K [US] ET AL) 20 January 2005 (2005-01-20) | 1-5,8 | INV. H01M8/1025 H01M8/1027 H01M8/1044 H01M8/106 H01M8/20 H01M8/10 |
| A | * examples 1-7,10-14 * | 6,7,9-15 | |
| X | CN 102 978 654 B (SHANDONG DONGYUE POLYMER MAT) 18 March 2015 (2015-03-18) | 1,2,4,5,8,11 | |
| A | * examples 2,7-9 * | 3,6,7,9,10,12-15 | |
| X | US 2020/016540 A1 (ZHAO YONGHONG [SG] ET AL) 16 January 2020 (2020-01-16) | 1,2,6,8,11 | |
| A | * paragraphs [0049] - [0055]; claims 1,21,22 * | 3-5,7,9,10,12-15 | |

TECHNICAL FIELDS SEARCHED (IPC)

H01M

The present search report has been drawn up for all claims

1

| Place of search | Date of completion of the search | Examiner |
|---|---|---|
| Munich | 9 November 2023 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 17 3159

This annex lists the patent family members relating to the patent documents cited in the above-mentioned European search report. The members are as contained in the European Patent Office EDP file on
The European Patent Office is in no way liable for these particulars which are merely given for the purpose of information.

09-11-2023

| Patent document cited in search report | Publication date | Patent family member(s) | Publication date |
|---|---|---|---|
| US 2005014432 A1 | 20-01-2005 | CA 2529087 A1 | 29-12-2004 |
| | | CN 1809455 A | 26-07-2006 |
| | | EP 1636027 A2 | 22-03-2006 |
| | | JP 2007520366 A | 26-07-2007 |
| | | US 2005014432 A1 | 20-01-2005 |
| | | WO 2004113070 A2 | 29-12-2004 |
| CN 102978654 B | 18-03-2015 | NONE | |
| US 2020016540 A1 | 16-01-2020 | CA 3057069 A1 | 27-09-2018 |
| | | CN 110691639 A | 14-01-2020 |
| | | EP 3600628 A1 | 05-02-2020 |
| | | JP 2020512185 A | 23-04-2020 |
| | | JP 2022122861 A | 23-08-2022 |
| | | US 2020016540 A1 | 16-01-2020 |
| | | US 2021394121 A1 | 23-12-2021 |
| | | WO 2018174848 A1 | 27-09-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 608146-33-4
- *CHEMICAL ABSTRACTS,* 25704-18-1
- *CHEMICAL ABSTRACTS,* 9003-39-8
- *CHEMICAL ABSTRACTS,* 25232-41-1
- *CHEMICAL ABSTRACTS,* 910484-73-0
- *CHEMICAL ABSTRACTS,* 25928-81-8
- *CHEMICAL ABSTRACTS,* 25212-74-2